(19) **Europäisches Patentamt / European Patent Office / Office européen des brevets**

(11) **EP 2 816 498 A1**

(12) **EUROPEAN PATENT APPLICATION**

(43) Date of publication:
24.12.2014 Bulletin 2014/52

(51) Int Cl.:
*G06F 21/10* (2013.01)

(21) Application number: 14171900.5

(22) Date of filing: 11.06.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 18.06.2013 KR 20130069956

(71) Applicant: Samsung Electronics Co., Ltd
Gyeonggi-do 443-742 (KR)

(72) Inventor: Kang, Hyuk
Gyeonggi-do (KR)

(74) Representative: Gover, Richard Paul et al
HGF Limited
Saviour House
9 St Saviourgate
York YO1 8NQ (GB)

(54) **Service providing method and electronic device using the same**

(57) A method of providing, by an electronic device, a service to an external device is provided. The method and electronic device includes receiving, from the external device, information about the external device and information about a service requested by the external device, displaying on a screen an object including the information about the external device and the information about the service requested by the external device, receiving an acceptance input of a user for providing the service requested by the external device, and providing the service requested by the external device to the external device based on the acceptance input.

FIG. 1

EP 2 816 498 A1

# Description

## CROSS-REFERENCE TO RELATED APPLICATION(S)

This application claims the benefit of a Korean patent application filed on June 18, 2013 in the Korean Intellectual Property Office and assigned Serial No. 10-2013-0069956, the entire disclosure of which is hereby incorporated by reference.

## TECHNICAL FIELD

The present disclosure relates to a method for providing a service requested by an external device to the external device, and an electronic device using the method.

## BACKGROUND

According to the related art, various devices support a different communication technology. For example, some devices do not support Bluetooth Low Energy (BLE), which is one of the most recent communication technologies, or some devices do not include a Near Field Communication (NFC) function. Thus, in order to allow devices to communicate data there between, a user needs to establish an appropriate communication link between the devices in consideration of a communication method supported by the devices. However, it is difficult for the user to know every communication technology such as NFC, Ant+, BLE, Bluetooth, Wi-Fi Direct, and the like, and select an appropriate communication method for a particular situation.

Thus, there is a demand for a system that can receive a service requested by an external device without manipulation by a user and that can provide the service requested by the external device to the external device by a simple manipulation of a user.

The above information is presented as background information only to assist with an understanding of the present disclosure. No determination has been made, and no assertion is made, as to whether any of the above might be applicable as prior art with regard to the present disclosure.

## SUMMARY

Aspects of the present disclosure are to address at least the above-mentioned problems and/or disadvantages and to provide at least the advantages described below. Accordingly, an aspect of the present disclosure is to provide a service providing method and an electronic device using the method, the electronic device displaying on a screen thereof information about services requested by peripheral external devices so that a user may easily view the services requested by the peripheral external devices and the requested services may be provided to the respective peripheral external devices according to an acceptance input of the user.

In accordance with an aspect of the present disclosure, a method of providing, by an electronic device, a service to an external device is provided. The method includes receiving, from the external device, information about the external device and information about a service requested by the external device, displaying on a screen an object including the information about the external device and the information about the service requested by the external device, receiving an acceptance input of a user for providing the service requested by the external device, and providing the service requested by the external device to the external device based on the acceptance input.

In accordance with an aspect of the present disclosure, the information about the external device may include at least one of identification information of the external device, capability information of the external device, state information of the external device, and communication connection information of the external device.

In accordance with an aspect of the present disclosure, the receiving of the information about the external device and information about the service requested may include receiving the information about the external device and the information about the service requested by the external device by using at least one of a Bluetooth Low Energy (BLE) communication method, a Near Field Communication (NFC) method, an ANT+ communication method, a Zigbee communication method, and a sound communication method.

In accordance with an aspect of the present disclosure, the displaying of the object may include: determining whether the service requested by the external device is available, and selectively displaying the object on the screen according to the determination as to whether the service requested is available.

In accordance with an aspect of the present disclosure, the providing of the service requested by the external device may include: establishing a communication link with the external device based on the information about the external device, and providing the service requested by the external device to the external device through the communication link.

In accordance with an aspect of the present disclosure, the providing of the service requested by the external device may include transmitting, to the external device through the communication link, communication connection information for connecting to another external device.

In accordance with an aspect of the present disclosure, the providing of the service requested by the external device may include transmitting a predetermined content to the external device through the communication link.

In accordance with an aspect of the present disclosure, the providing of the service requested by the external device may include: receiving authentication information of the external device, transmitting to the external device an authentication request including the authentication information of the external device, receiving from the external device a result of authentication regarding the authentication request, and providing the service requested by the external device to the external device based on a result of the authentication.

In accordance with an aspect of the present disclosure, the providing of the service requested by the external device based on a result of the authentication may include requesting, when authentication is successful, a communication connection to the external device.

In accordance with an aspect of the present disclosure, the displaying of the object may include: receiving a selection input of the user regarding the object displayed on the screen, and displaying additional information corresponding to the object based on the selection input of the user.

In accordance with an aspect of the present disclosure, the selection input of the user may include a touch input of touching the object for a threshold period of time or longer.

In accordance with an aspect of the present disclosure, the displaying of the object on a screen may include, when the external device includes a plurality of devices, displaying an object list that includes objects respectively corresponding to the plurality of devices.

In accordance with an aspect of the present disclosure, the receiving of the acceptance input of the user may include: receiving a selection of at least one object from the object list, and receiving an acceptance input of the user for providing a requested service included in the selected object.

In accordance with another aspect of the present disclosure, a method of providing, by an electronic device, a service to an external device is provided. The method includes receiving, from the external device, information about the external device and information about a service requested by the external device, determining whether the service requested by the external device is available, and selectively displaying on a screen, according to the determination as to whether the service requested is available, an object including the information about the external device and the information about the service requested by the external device.

In accordance with another aspect of the present disclosure, an electronic device is provided. The electronic device includes a communication unit configured to receive, from the external device, information about an external device and information about a service requested by the external device, a display unit configured to display on a screen an object including the information about the external device and the information about the service requested by the external device, a user input unit configured to receive an acceptance input of a user for providing the service requested by the external device, and a control unit configured to provide the service requested by the external device to the external device based on the acceptance input.

In accordance with an aspect of the present disclosure, the control unit may be further configured to determine whether the services requested by the external device is available, and to control the display unit to selectively display the object according to the determination as to whether the service requested is available.

In accordance with an aspect of the present disclosure, the control unit may be further configured to establish a communication link with the external device based on the information about the external device, and to provide the service requested by the external device to the external device through the communication link.

In accordance with an aspect of the present disclosure, the control unit may be further configured to control the communication unit to transmit, to the external device through the communication link, communication connection information for connecting to another external device.

In accordance with an aspect of the present disclosure, the user input unit may be further configured to receive authentication information of the external device, the communication unit may be further configured to transmit to the external device an authentication request including the authentication information of the external device, and receive from the external device a result of authentication regarding the authentication request, and the control unit may be further configured to provide the service requested by the external device to the external device based on a result of the authentication.

In accordance with an aspect of the present disclosure, the user input unit may be further configured to receive a selection input of the user regarding the object displayed on the screen, and the control unit may be further configured to control, based on the selection input of the user, the display unit to display additional information corresponding to the object.

In accordance with an aspect of the present disclosure, the display unit may be further configured to display, when the external device includes a plurality of devices, an object list that includes objects respectively corresponding to the plurality of devices.

In accordance with another aspect of the present disclosure, a non-transitory computer readable recording medium having embodied thereon a program for implementing the method described above is provided.

Other aspects, advantages, and salient features of the disclosure will become apparent to those skilled in the art from the following detailed description, which, taken in conjunction with the annexed drawings, discloses various embodiments of the present disclosure.

**BRIEF DESCRIPTION OF THE DRAWINGS**

The above and other aspects, features, and advantages of certain embodiments of the present disclosure will be more apparent from the following description taken in conjunction with the accompanying drawings in which:

FIG. 1 is a view schematically illustrating a service providing system according to an embodiment of the present disclosure;

FIG. 2 is a flowchart for explaining a service providing method according to an embodiment of the present disclosure;

FIG. 3 is a view schematically illustrating an example in which an external device broadcasts advertisement information according to an embodiment of the present disclosure;

FIG. 4 is a flowchart for explaining a method of searching for an external device by an electronic device according to a predetermined event view according to an embodiment of the present disclosure;

FIGS. 5A, 5B, and 5C are schematic views for explaining a predetermined event related to a device scan according to an embodiment of the present disclosure;

FIGS. 6A and 6B are views schematically illustrating an example of scanning an external device based on magnetic field information according to an embodiment of the present disclosure;

FIGS. 7A and 7B are views schematically illustrating an example of scanning an external device based on color information measured by an RGB sensor, according to an embodiment of the present disclosure;

FIGS. 8A and 8B are views schematically illustrating an example of scanning an external device based on sound information obtained by using a microphone according to an embodiment of the present disclosure;

FIG. 9 is a flowchart illustrating a method of filtering an object related to an external device displayed on a screen and providing a requested service through a communication link by an electronic device according to an embodiment of the present disclosure;

FIG. 10 is a view schematically illustrating an indicator that notifies that information about a requested service is received according to an embodiment;

FIG. 11 is a view schematically illustrating an object including information about an external device and information about a requested service according to an embodiment of the present disclosure;

FIG. 12 illustrates an acceptance input window through which acceptance regarding a service requested by an external device is received according to an embodiment of the present disclosure;

FIG. 13 is a view schematically illustrating an example of sharing Access Point (AP) information by an electronic device and an external device according to an embodiment of the present disclosure;

FIG. 14 is a view schematically illustrating an example of broadcasting information about another requested service by an external device according to an embodiment of the present disclosure;

FIGS. 15A and 15B are views schematically illustrating an operation of forming a data communication link via an Out Of Band (OOB) method by an electronic device according to an embodiment of the present disclosure;

FIG. 16 is a flowchart illustrating a method of detecting an external device to which an electronic device is to provide a requested service according to an embodiment of the present disclosure;

FIG. 17 is a view schematically illustrating an example of outputting authentication information by an external device according to an embodiment of the present disclosure;

FIG. 18 is a flowchart illustrating a method of providing an object list by an electronic device according to an embodiment of the present disclosure;

FIGS. 19A and 19B illustrate a Graphical User Interface (GUI) for providing an object list and additional information corresponding to an object selected from the object list according to an embodiment of the present disclosure;

FIG. 20 is a block diagram illustrating a structure of an electronic device according to an embodiment of the present disclosure; and

FIG. 21 is a view schematically illustrating a data communication protocol used by a Seamless Sensing Platform (SSP) according to an embodiment of the present disclosure.

The same reference numerals are used to represent the same elements throughout the drawings.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

General and widely-used terms have been employed herein in consideration of the functions provided by the present disclosure. These terms may vary according to the intention of one of ordinary skill in the art, case precedents, or the emergence of new technologies. Additionally, in some cases, the applicant may arbitrarily select specific terms. Then, the applicant will provide the meaning of the terms in the description of the present disclosure. Accordingly, it will be understood that the terms used herein should be interpreted as having meanings consistent with their meanings in the context of the relevant art and will not be interpreted in an idealized or overly formal sense unless expressly so defined herein.

It will be further understood that the terms "comprises," "comprising," "includes," and/or "including," when used herein, specify the presence of certain components, but do not preclude the presence or addition of one or more other components, unless otherwise specified. Additionally, terms such as 'unit' or 'module' mean entities for processing at least one function or operation. These entities may be implemented by hardware, software, or a combination of hardware and software.

Throughout the specification, "short-range communication" may mean at least one of Wireless-Fidelity (Wi-Fi), Bluetooth, Zigbee, Wi-Fi Direct (WFD), Ultra Wideband (UWB), Infrared Data Association (IrDa), Bluetooth Low Energy (BLE), Near Field Communication (NFC), and Ant+, and the like, but is not limited thereto.

Wi-Fi may include an infrastructure mode in which an Access Point (AP) for transceiving wireless signals communicates data with a plurality terminals within a predetermined range, and an adhoc mode in which data is exchanged in a Peer-To-Peer (P2P) form between terminals without an AP.

Bluetooth is a standard for short range, low power wireless communication between wireless communication devices.

Ultra Wideband (UWB) is a low power, short distance wireless technology for transmitting a large amount of digital data through a wide spectrum frequency.

WFD is a new version of Wi-Fi technology and enables direct communication between devices. In other words, information may be shared by communicating between devices via WFD even when no hot spot, router, or AP exists.

ZigBee is one of the IEEE 802.15.4 standards supporting short range communication. ZigBee is a technology for ubiquitous computing and short range communication within 10-20 m in a wireless networking field at home or office.

BLE refers to a core function of Bluetooth v. 4.0 that is one of the short range communication technologies. BLE has a relatively small duty cycle compared to a classic Bluetooth specification and may be produced at low costs and may operate for several years with only a coinsized battery due to reduced mean power and standby power.

NFC, which is a sort of Radio Frequency ID (RFID) or electronic tag communication, refers to a non-contact short range wireless communication using a frequency band of 13.56MHz. NFC enables data communication between devices at a distance of 10 cm through a short range wireless communication technology. NFC may include a P2P mode, a Reader/Writer (R/W) mode, and a card emulation mode. Ant+ signifies a short range, wireless communication technology characterized by low power consumption and a frequency band of 2.4 GHz.

The attached drawings for illustrating embodiments of the present disclosure are referred to in order to gain a sufficient understanding of the present disclosure, the merits thereof, and the objectives accomplished by the implementation of the present disclosure. Hereinafter, the present disclosure will be described in detail by explaining various embodiments of the disclosure with reference to the attached drawings. Like reference numerals in the drawings denote like elements.

As used herein, the term "and/or" includes any and all combinations of one or more of the associated listed items. Expressions such as "at least one of," when preceding a list of elements, modify the entire list of elements and do not modify the individual elements of the list.

As a non-exhaustive illustration only, an electronic device described herein may refer to mobile devices such as a cellular phone, a Personal Digital Assistant (PDA), a digital camera, a portable game console, an MP3 player, a Portable/Personal Multimedia Player (PMP), a handheld e-book, a tablet PC, a portable laptop PC, a Global Positioning System (GPS) navigation, a digital broadcasting terminal, and devices such as a desktop PC, a high definition television (HDTV), an optical disc player, a set-top box, and the like capable of wireless communication or network communication consistent with that disclosed herein.

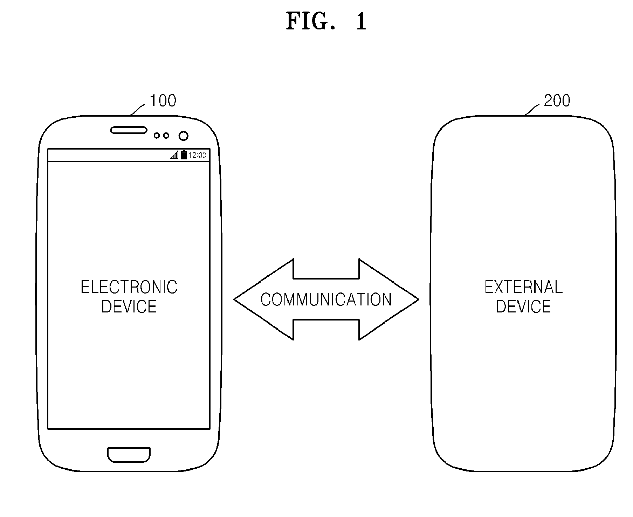

FIG. 1 is a view schematically illustrating a service providing system, according to an embodiment of the present disclosure.

Referring to FIG. 1, the service providing system may include an electronic device 100 and an external device 200. According to various embodiments of the present disclosure, the electronic device 100 may be a device for scanning an external device and the external device 200 may be a device for advertising (e.g., broadcast) the external device 200's identification information. The electronic device 100 and the external device 200 are respectively described below.

The electronic device 100 may include at least one communication unit for communicating with the external device 200. For example, the electronic device 100 may include a short range communication unit, a mobile communication unit, for example, 2G, 3G, 4G, etc., a microphone, a sound output unit, and the like. However, various embodiments of the present disclosure are not limited thereto. As an example, the short range communication unit may be (or otherwise include) a Bluetooth communication unit, a Bluetooth Low Energy (BLE) communication unit, a Near Field Communication (NFC/RFID) unit, a Wi-Fi (WLAN) communication unit, a ZigBee communication unit, an IrDA communication unit, a WFD communication unit, an UWB communication unit, an Ant+ communication unit, and/or the like.

According to various embodiments of the present disclosure, the electronic device 100 may scan the external device 200 by using the at least one communication unit. In other words, the electronic device 100 may receive a signal transmitted by the external device 200 and analyze a received signal, thereby scanning the external device 200.

For example, according to various embodiments of the present disclosure, the electronic device 100 may receive advertisement information that is broadcasted by the external device 200. The electronic device 100 may analyze the advertisement information to check identification information of the external device 200, information about a service requested by the external device 200, capability information about a communication method supported by the external device 200, information about a preferred communication method, or state information of the external device 200.

According to various embodiments of the present disclosure, the electronic device 100 may automatically scan an external device when a predetermined event occurs, for example, when a lock screen is unlocked or magnetic field information surpasses reference magnetic field information, even when there is no separate request by a user regarding an external device scan.

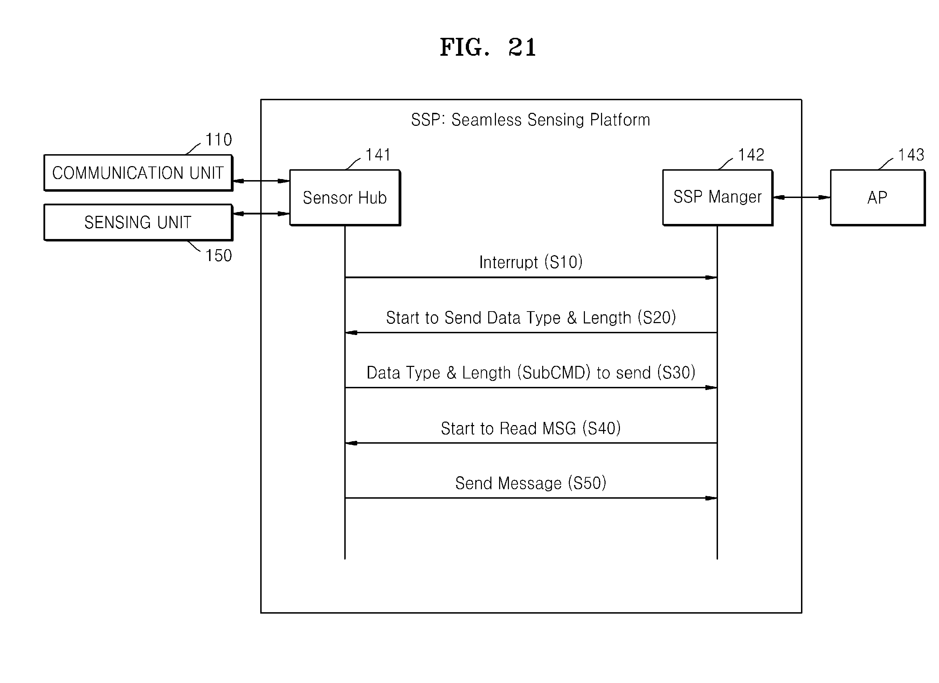

According to various embodiments of the present disclosure, in the electronic device 100, a Seamless Sensing Platform (SSP) may be operated separately from an Application Processor (AP). The electronic device 100 may connect a sensing unit or a communication unit to a sensor hub (not shown) of the SSP. The sensor hub (not shown) of the SSP may recognize an inner situation of the electronic device 100 (e.g., a configuration of the electronic device 100, capabilities of the electronic device 100, a context of the electronic device, and/or the like) and a situation nearby the electronic device 100 by collecting sensing information or scanning the external device 200, without waking up the AP from a sleep mode. The SSP may wake up the AP from a sleep mode when a predetermined event occurs. For example, when a service requested by the external device 200 is supportable. The SSP will be described below in detail with reference to FIG. 21.

According to various embodiments of the present disclosure, the electronic device 100 may be embodied in a variety of forms as discussed above in relation to examples of electronic devices. For example, the electronic device 100 may be a mobile phone, a smartphone, a laptop computer, a tablet PC, an E-book device, a digital broadcasting terminal, a PDA, a PMP, a navigation device, an MP3 player, a digital camera, and the like. However, various embodiments of the present disclosure are not limited thereto.

The external device 200 may advertise information about the external device 200. For example, the external device 20 may advertise identification information, capability information, state information, information about a preferred communication method, communication connection information, information about a service requested by the external device 200, and the like, through a plurality of communication methods. The external device 200 may broadcast information about the external device 200 or information about a service requested by the external device 200 or the like by using a BLE communication method, an ANT+ communication method, an NFC method, a sound communication method, a ZigBee communication method, and/or the like. The broadcasting may refer to providing data to the external environment (e.g., from which external devices may receive the data). For example, the broadcasting may include provision, transmission, displaying, or outputting of data.

According to various embodiments of the present disclosure, the sound communication may correspond to a communication method for transmitting and receiving data using sound. For example, the external device 200 may broadcast data to the outside by embedding the data in sound in an inaudible range, music, announcement broadcasting, and/or the like.

According to various embodiments of the present disclosure, the external device 200 may be of various types of electronic devices. For example, the external device 200 may be a display device including a screen or an accessory device having no screen. As another example, the external device 200 may be a mobile phone, a smartphone, a laptop computer, a tablet PC, an e-book device, a digital broadcasting terminal, a PDA, a PMP, an audio device, a display device, a navigation device, an MP3 player, a digital camera, a smart TV, a wireless speaker, a Bluetooth headset, a set top box, a home sync, a refrigerator with a communication function, an air-conditioning system, a water purifier, and the like. However, various embodiments of the present disclosure are not limited thereto.

According to various embodiments of the present disclosure, the external device 200 may include a magnetic substance. According to various embodiments of the present disclosure, the magnetic substance may be provided inside the external device 200 or outside the external device 200 in a form of a dongle or accessory.

The external device 200 may include a communication unit for communicating with the electronic device 100. For example, the external device 200 may include a short range communication unit such as a Bluetooth communication unit, a BLE communication unit, an NFC/RFID unit, a Wi-Fi (WLAN) communication unit, a ZigBee communication unit, an IrDA communication unit, a WFD communication unit, an UWB communication unit, an Ant+ communication unit, and the like, a mobile communication unit such as 2G, 3G, 4G, etc., a sound output unit, a microphone, and a display unit,. However, various embodiments of the present disclosure are not limited thereto.

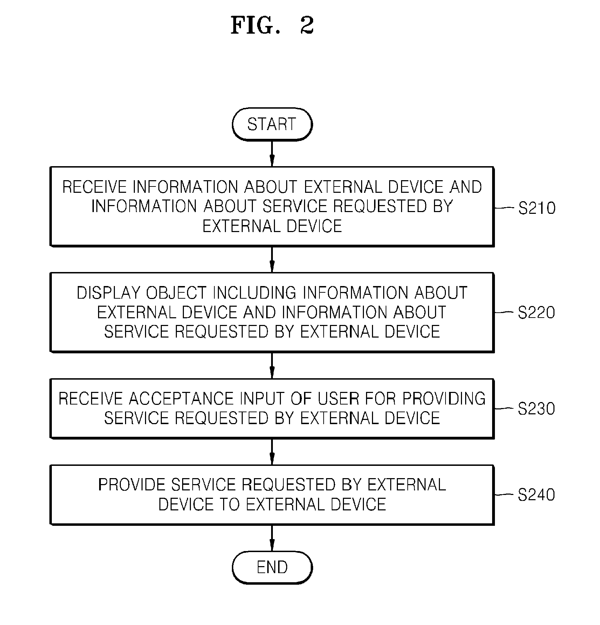

The electronic device 100 may perform an operation of receiving the advertisement information broadcast by the external device 200 and providing a service requested by the external device 200 to the external device 200 based on the advertisement information will be described below in detail with reference to FIG. 2.

FIG. 2 is a flowchart of a service providing method used by the electronic device according to an embodiment of the present disclosure.

Referring to FIG. 2, at operation S210, the electronic device 100 may receive information about the external device 200 broadcast by the external device and information about a service requested by the external device 200.

The information about the external device 200 may include at least one of identification information of the external device 200, capability information of the external device 200, state information of the external device 200, and communication connection information of the external device 200. According to various embodiments of the present disclosure, the identification information of the external device 200, as unique information about the external device 200 for identification, may be, for example, a MAC address, a device ID, a device name, a product serial number, a nickname, and/or the like. According to various embodiments of the present disclosure, the electronic device 100 may receive an identification image of the external device 200 also from the external device 200.

According to various embodiments of the present disclosure, the capability information relates to a function supported by the external device 200 and may include, for example, information about supported communication methods such as BLE, Bluetooth, NFC, Wi-Fi, and the like, information about a mounted sensor such as a magnetic sensor, an accelerometer sensor, a temperature sensor, a gyroscope sensor, a proximity sensor, and the like, and information about available services, such as, Universal Plug and Play (UPnP), Digital Living Network Alliance (DLNA), and the like. However, various embodiments of the present disclosure are not limited thereto.

According to various embodiments of the present disclosure, the state information indicates a current state of the external device 200 and may include, for example, information about an active or inactive state of a communication unit, information about an active or inactive state of a sensor, and information about a mode set on the external device 200, such as, a lock mode, an operation mode, a vibration mode, an automatic screen rotation mode, a sync mode, and the like. However, various embodiments of the present disclosure are not limited thereto.

The communication connection information of the external device 200 is needed to set up a communication connection between the electronic device 100 and the external device 200, and may be, for example, information about a communication method preferred by the external device 200, a Bluetooth (BT) address, a product name, profile information, a Service Set Identifier (SSID), an IP address, a Media Access Control (MAC) address, a channel number, and a security key.

According to various embodiments of the present disclosure, the information about a preferred communication method may be information about a priority of the preferred communication method in the external device 200. For example, the external device 200 may prefer the most a Bluetooth communication method followed by a Wi-Fi Direct communication method.

According to various embodiments of the present disclosure, information about a requested service may refer to information about a service which the external device 200 wishes to be provided. Examples of the requested service include sharing of Access Point (AP) information, replaying of contents, Bluetooth connection, and screen mirroring, and are not limited thereto.

According to various embodiments of the present disclosure, the electronic device 100 may receive information about the external device 200 and information about a service requested by the external device 200 by using at least one of a BLE communication method, a NFC method, an ANT+ method, a Zigbee communication method, and a sound communication method.

At operation S220, the electronic device 100 may display an object including information about the external device 200 and information about a requested service. For convenience of description, an 'object including information about the external device 200 and information about a requested service' may be referred to as an 'object related to the external device 200.'

According to various embodiments of the present disclosure, the electronic device 100 may generate an object related to the external device 200 by using some of the information about the external device 200 and information about a requested service received from the external device 200. For example, the electronic device 100 may generate an object related to the external device 200 that includes an identification image and identification information of the external device 200 and information about a requested service. For example, according to various embodiments of the present disclosure, the object related to the external device 200 may be implemented as an icon, a thumbnail image, or the like.

According to various embodiments of the present disclosure, when the external device 200 includes a plurality of devices, the electronic device 100 may display a list of objects respectively corresponding to the plurality of devices.

According to various embodiments of the present disclosure, when a selection input of a user regarding an object that is displayed on a screen is received, the electronic device 100 may display additional information corresponding to an object for a predetermined period of time based on the selection input of the user. The additional information may be, for example, specific information about a requested service, state information of the external device 200, or capability information of the external device 200.

According to various embodiments of the present disclosure, the selection input of a user may include a touch input of touching an object for a predetermined period of time, for example, three seconds. When a touch input for touching an object for a predetermined period of time, for example, three seconds, is received, the electronic device 100 may display additional information in the form of a floating User Interface (UI). According to various embodiments of the present disclosure, additional information may be partially overlapped with an object related to the external device 200.

At operation S230, the electronic device 100 may receive an acceptance input of a user for providing a requested service.

For example, when a touch input regarding an object displayed on a screen (e.g., tapping, double tapping, swiping, or flicking) is received from a user, the electronic device 100 may display an acceptance window through which an acceptance input may be received, on a screen. In this case, a user may allow the electronic device 100 to provide a requested service to the external device 200 through the acceptance window.

According to various embodiments of the present disclosure, the electronic device 100 may also receive an acceptance input of a user for providing a requested service included in at least one object of an object list.

At operation S240, the electronic device 100 may provide a requested service to the external device 200 based on the acceptance input.

According to various embodiments of the present embodiment, the electronic device 100 may establish a communication link with the external device 200 based on information about the external device 200. For example, the electronic device 100 may establish a communication link through which data may be transmitted to or received from the external device 200 in consideration of the capability information of the external device 200, communication connection information of the external device 200, and information about a preferred communication method of the external device 200, which are received from the external device 200. The establishment of a communication link may signify a state in which the electronic device 100 and the external device 200 may communicate data through at least one communication method.

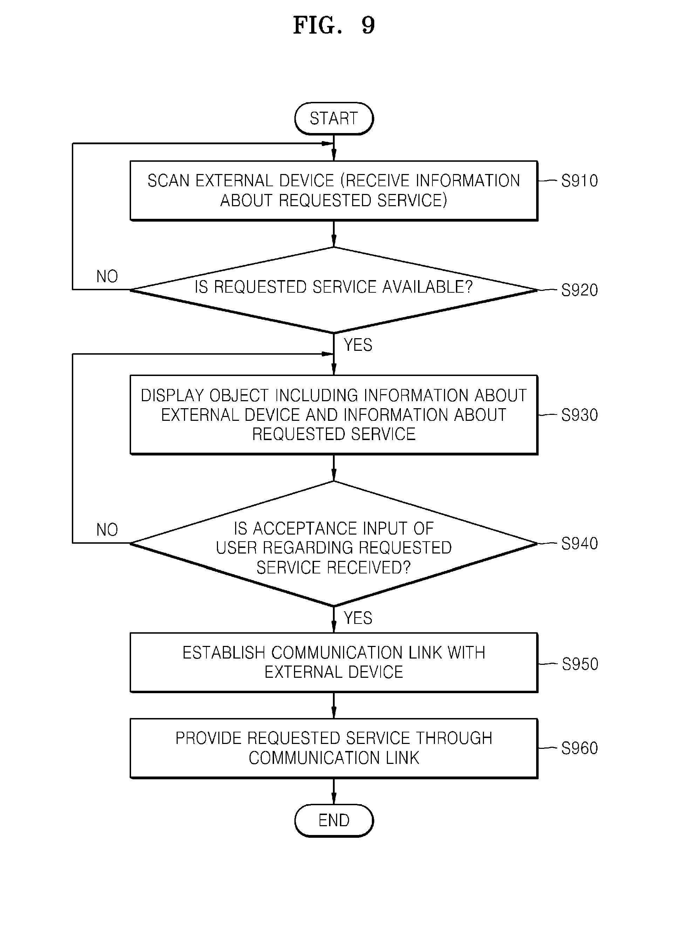

According to various embodiments of the present disclosure, a communication link may include a BLE communication link, a sound communication link, a Bluetooth communication link, a Wi-Fi communication link, and the like. However, various embodiments of the present disclosure are not limited thereto. An operation of establishing a communication link by the electronic device 100 will be further described in detail later with reference to FIG. 9.

According to various embodiments of the present disclosure, the electronic device 100 may provide a requested service to the external device 200 via a communication link. For example, the electronic device 100 may transmit communication connection information needed by the external device 200 to be connected to another external device (e.g., a relay) to the external device 200 via the communication link.

According to various embodiments of the present disclosure, the electronic device 100 may transmit or receive predetermined content to or from the external device 200 via a communication link. Throughout the specification, 'content' refers to digital information provided through a wired or wireless communication network. According to various embodiments of the present disclosure, content may include video content, for example, a TV program image, a Video On Demand (VOD), User-Created Contents (UCC), a music video, a Youtube image, a still image content, for example, a photographic image or a drawing, a text content, for example, an electronic book (poetry, novel), a letter, a work file or a web page, a music content, for example, music, instrumental, or radio broadcasting, an application, for example, a widget or game, and the like. However, various embodiments of the present disclosure are not limited thereto.

According to various embodiments of the present disclosure, the electronic device 100 may encode data of a predetermined section of a content being replayed. The electronic device 100 may transmit the encoded data to the external device 200. The electronic device 100 may encode data by using various encoding algorithms. Examples of encoding algorithms include MPEG-2, MPEG-4, H.264, and AVC, and the like. However, various embodiments of the present disclosure are not limited thereto.

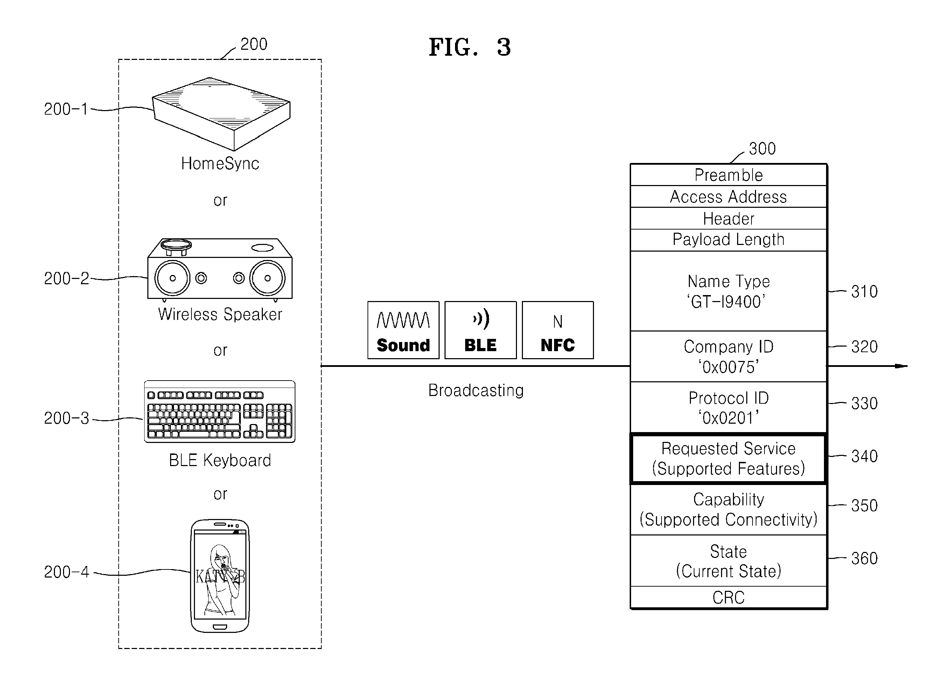

According to various embodiments of the present disclosure, the order of operations 210 through 240 may be modified or some operations may be omitted. Hereinafter, advertisement information that is broadcasted by the external device 200 will be described in detail with reference to FIG. 3.

FIG. 3 is a view schematically illustrating an example in which an external device broadcasts advertisement information according to an embodiment of the present disclosure.

Referring to FIG. 3, the external device 200 may be a home sync 200-1, a wireless speaker 200-2, a wireless keyboard (e.g., BLE keyboard) 200-3, a mobile terminal 200-4, and/or the like.

As illustrated in FIG. 3, the external device 200 may broadcast advertisement information including identification information and information about a requested service or the like by using at least one communication method. For example, the external device 200 may process advertisement information in the form of an advertising packet and broadcast the processed advertisement information to the outside by using a BLE communication unit.

A data packet 300 of the advertisement information broadcasted to the outside may include an identification information field 310 (e.g., Name Type "GTI9400"), indicating identification information of the external device 200, a manufacturer field 320 (or example, Company ID "0X0075", indicating a manufacturer manufacturing the external device 200, a protocol field 330, for example, Protocol ID "0X0201" indicating a protocol used by the external device 200, a service field 340 indicating a service providing the external device 200, a capability field 350 indicating a communication method supported by the external device 200, and a state field 360 indicating a current state of the external device 200, and the like. However, various embodiments of the present disclosure are not limited thereto.

Meanwhile, the external device 200 may not be aware of a communication method supported by the electronic device 100, and thus, the external device 200 may broadcast the advertisement information through a plurality of communication methods.

For example, when the external device 200 includes a speaker and a BLE communication unit, the external device 200 may output a sound signal, in which advertisement information is embedded, to the outside via the speaker and may simultaneously broadcast, to the outside via the BLE communication unit, advertisement information processed into a form of an advertising packet.

According to various embodiments of the present disclosure, when the external device 200 includes a Near Field Communication (NFC) tag, the external device 200 may encode advertisement information into a NFC Data Exchange Format (NDEF). The external device 200 may store the advertisement information encoded into an NDEF in an NFC tag. When the electronic device 100 approaches the external device 200 within an NFC radius, the advertisement information stored in the NFC tag of the external device 200 may be transmitted to the electronic device 100.

According to various embodiments of the present disclosure, the external device 200 may sequentially broadcast advertisement information through a plurality of communication methods. According to various embodiments of the present disclosure, the external device 200 may sequentially broadcast advertisement information according to a predetermined order. The predetermined order may be set by a user or a system in advance and may be changed by the user or the system.

According to various embodiments of the present disclosure, the predetermined order may be set in the order from a communication method having the least power consumption or the shortest latency. The latency signifies a delay time in communicating signals between a sender and a receiver. For example, the external device 200 may determine the order of a communication method for broadcasting advertisement information to the outside in the order of the BLE communication method, the ANT+ communication method, the NFC method, the sound communication method, and the QR code.

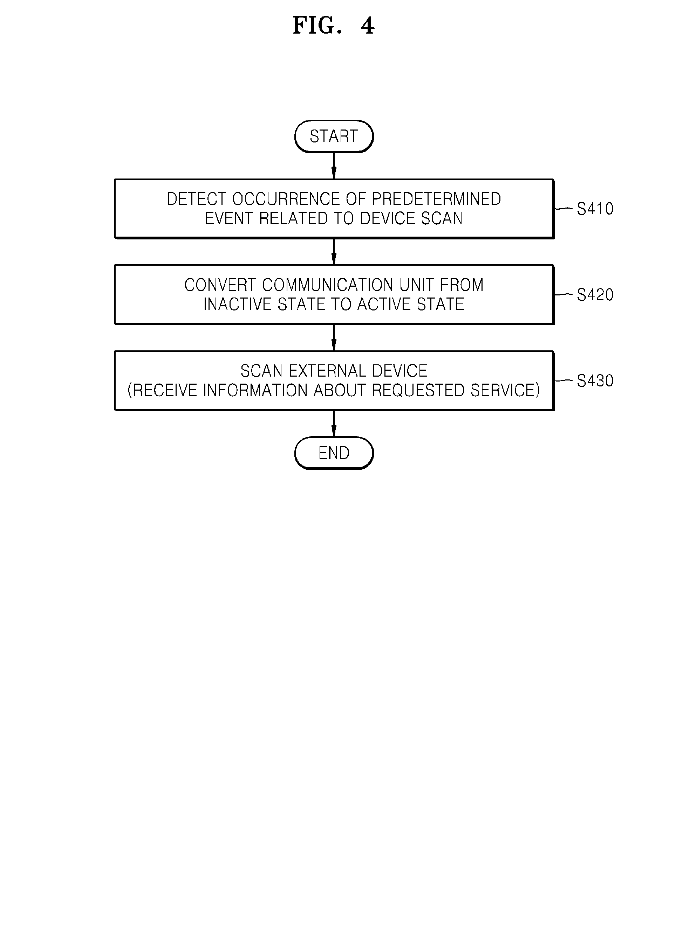

According to various embodiments of the present disclosure, the external device 200 may encode advertisement information into a previously set encoding code for information security, and may broadcast the encoded advertisement information to the outside. Hereinafter, a method of automatically searching for the external device 200 by the electronic device 100 when a predetermined event occurs will be described in detail with reference to FIG. 4.

FIG. 4 is a flowchart of a method of searching for an external device as performed by an electronic device according to an embodiment of the present disclosure.

At operation S410, the electronic device 100 may detect an occurrence of a predetermined event related to a device scan. According to various embodiments of the present disclosure, a predetermined event may be an event of triggering scanning of external devices.

For example, the predetermined event may be an event of unlocking a lock screen, an event of executing a preset application, an event of selecting a preset button, and/or the like. However, various embodiments of the present disclosure are not limited thereto. The preset button may be a physical button included in the electronic device 100 or a Graphic User Interface (GUI) button displayed on the screen of the electronic device 100.

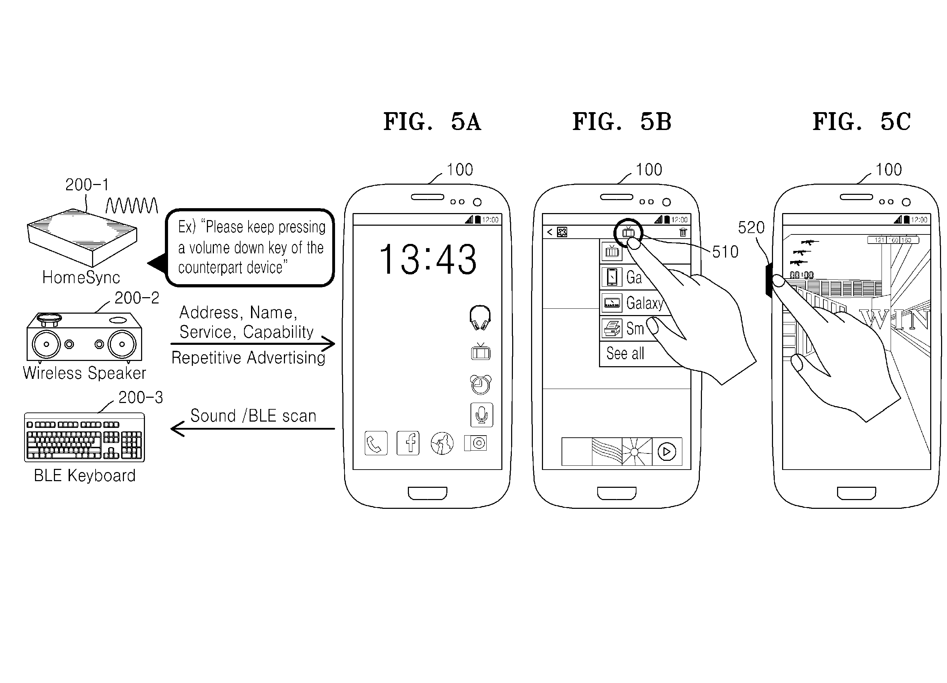

According to various embodiments of the present disclosure, the predetermined event may include an event in which magnetic field information obtained through a magnetic sensor is over a predetermined reference magnetic field information, an event in which color information obtained through an RGB sensor matches reference color information, or an event in which sound information obtained through a microphone matches reference sound information. A detailed description related to the predetermined event is provided below with reference to FIGS. 5A to 8.

At operation S420, the electronic device 100 may convert at least one communication unit which is included for communicating with the external device 200 and is in an inactive state, to an active state, based on occurrence of a predetermined event. For example, according to various embodiments of the present disclosure, the electronic device 100 may convert one communication unit or at least two communication units into an active state. According to various embodiments of the present disclosure, the electronic device 100 may simultaneously or sequentially activate a plurality or communication units.

The plurality of communication units may include at least two of the BLE communication unit, the ANT+ communication unit, the NFC unit, the ZigBee communication unit, the microphone for receiving a sound signal, the camera for capturing a QR code, and a touch panel for recognizing a touch code, and the like. However, various embodiments of the present disclosure are not limited thereto.

At operation S430, the electronic device 100 may scan the external device 200 via an activated communication unit. For example, the electronic device 100 may receive information about the external device 200 that is broadcasted by the external device 200 and information about a requested service via the activated communication unit. According to various embodiments of the present disclosure, the electronic device 100 may search for the external device 200 by using a plurality of communication units simultaneously or sequentially.

According to various embodiments of the present disclosure, the electronic device 100 may search for the external device 200 by first using a BLE communication unit having a lowest power consumption, and when the external device 200 is not found a predetermined period of time via the BLE communication unit (e.g., 1-2 seconds), the microphone may be converted into an active state to search for the external device 200 that transmits a sound signal. When a sound signal is not received for a predetermined period of time (e.g., 30 seconds) through the microphone, the electronic device 100 may convert the camera into an activate state and may capture a QR code displayed on a display unit of the external device 200.

Hereinafter, a predetermined event related to a device scan will be described in detail with reference to FIGS. 5A through 8.

FIGS. 5A, 5B, and 5C are schematic views for explaining a predetermined event related to a device scan according to an embodiment of the present disclosure.

Referring to FIGS. 5A to 5C, an electronic device 100 is a mobile terminal, and an external device 200 may correspond to a home sync 200-1, a wireless speaker 200-2, or a wireless keyboard 200-3.

As illustrated in FIGS. 5A to 5C, the external device 200 may repeatedly broadcast advertisement information including identification information (e.g., address or name), capability information (e.g., capability), and information about a requested service by using at least one communication method (e.g., BLE, NFC, Ant+, sound, or Zigbee).

When the external device 200 includes a sound output unit such as the wireless speaker 200-1 and power is supplied to the external device 200, the external device 200 may output a sound signal by inserting advertisement information in an inaudible range of the sound signal including voice guidance data (e.g., "Please keep pressing a volume down key of the counterpart device"). Simultaneously, the external device 200 may broadcast the advertisement information by using a plurality of communication methods for example, the BLE communication method, the NFC method, the Ant+ communication method, the NFC method, and/or the like.

As illustrated in FIG. 5A, when the user unlocks a lock screen of the electronic device 100, the electronic device 100 may detect an occurrence of an event of unlocking a lock screen. If the event of unlocking a lock screen is preset as an event of triggering a device scan, the electronic device 100 may perform scanning of the external device 200 by using at least one of the BLE communication unit and the microphone. According to various embodiments of the present disclosure, an event of activating a screen may be preset as the event of triggering a device scan. In this case, when a user turns a screen on by pressing a home button or a power button, the electronic device 100 may automatically scan an external device.

An event of selecting a predetermined button may be preset as the event of triggering a device scan. The predetermined button may be a button of a GUI type displayed on the screen or a button physically attached on the electronic device 100.

For example, as illustrated in FIG. 5B, the user may select a share button 510 to share a photo with the external device 200. In this case, if an event of selecting the share button 510 is preset as the event of triggering a device scan, the electronic device 100 may perform scanning of the external device 200 by using at least one of the BLE communication unit and the microphone.

As illustrated in FIG. 5C, the user may select a volume control button 520. In this case, if an event of selecting the volume control button 520 is preset as the event of triggering a device scan, the electronic device 100 may perform scanning of the external device 200 by using at least one of the BLE communication unit and the microphone.

Although in FIGS. 5A to 5C it is shown that the external device 200 is scanned by using the BLE communication unit and the microphone, various embodiments of the present disclosure are not limited thereto. In other words, the electronic device 100 may receive information about a requested service, which is broadcasted by the external device 200, also through the NFC unit, the Ant+ communication unit, the Zigbee communication unit, the camera, and the like.

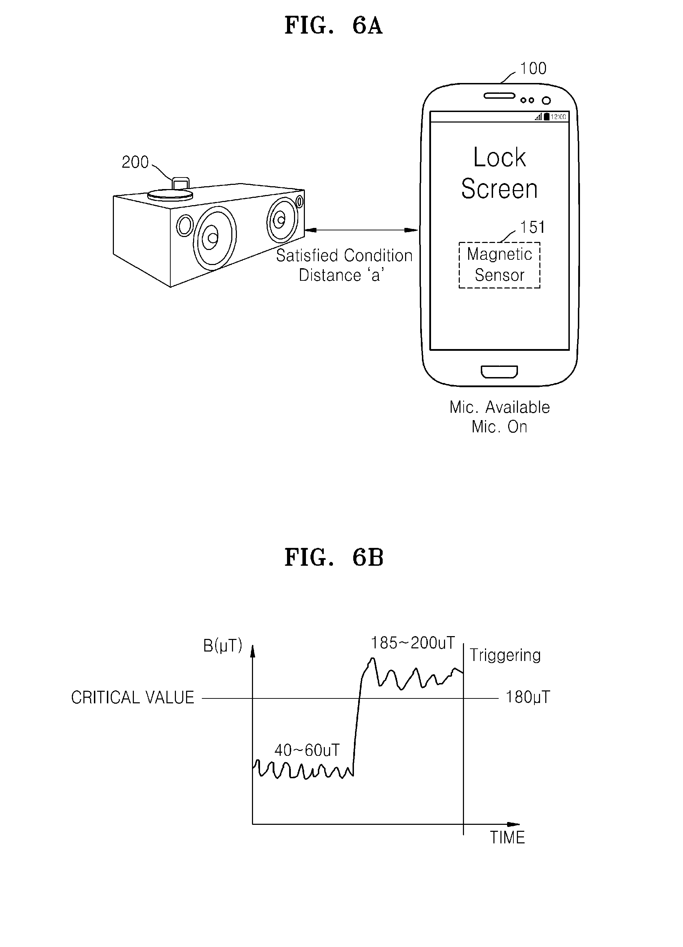

The occurrence of a predetermined event related to a device scan using a magnetic sensor detected by the electronic device 100 will be described below in detail with reference to FIGS. 6A and 6B.

FIGS. 6A and 6B are views schematically illustrating an example of searching for an external device based on magnetic field information according to an embodiment of the present disclosure.

Referring to FIG. 6A, the electronic device 100 may include a magnetic sensor 151. The magnetic sensor 151 may include three sensors that respectively measure a magnitude of magnetic fields in directions along X, Y, and Z axes. According to various embodiments of the present disclosure, the electronic device 100 may obtain magnetic field information by using the magnetic sensor 151.

According to various embodiments of the present disclosure, the magnetic field information may be information about a direction of a magnetic field, magnitude of the magnetic field, a magnetic force, a change in the magnetic field, a change in the magnetic force, and the like. However, various embodiments of the present disclosure are not limited thereto. According to various embodiments of the present disclosure, the magnetic field information may be an integer value of the magnitude of the magnetic field or a magnetic force, or a vector having a direction and magnitude.

For example, according to various embodiments of the present disclosure, the magnetic field information may be a sum of three vectors $(\sqrt{x^2 + y^2 + z^2})$, or may be magnitude of one of vectors along x, y, and z axes (|x|, |y| , |z|), or a magnitude of a sum of two vectors from among the x, y, and x axes $(\sqrt{x^2 + y^2}, \sqrt{x^2 + z^2}, \sqrt{y^2 + z^2})$. According to various embodiments of the present disclosure, the magnetic field information may be a sum of the squares of the magnitudes of the three vectors $(x^2+y^2+z^2)$.

According to various embodiments of the present disclosure, the electronic device 100 may obtain magnetic field information at a predetermined cycle (e.g., 0.1 seconds), by using the magnetic sensor 151. According to various embodiments of the present disclosure, the electronic device 100 may obtain magnetic field information through the magnetic sensor 151 when a movement of the electronic device 100 is detected. When the electronic device 100 is located in a preset area (e.g., a house, an office, or the like), the magnetic field information may be obtained through the magnetic sensor 151.

According to various embodiments of the present disclosure, when obtaining magnetic field information through the magnetic sensor 151, the electronic device 100 may consider angular velocity information detected by a gyroscope and acceleration information detected by an accelerometer sensor. In other words, the electronic device 100 may be begin moving when a magnetic sensor value is measured, and thus, the electronic device 100 may further consider angular velocity information and acceleration information in order to obtain accurate magnetic field information.

The electronic device 100 may compare the magnetic field information obtained through the magnetic sensor 151 and predetermined reference magnetic field information. In other words, the electronic device 100 may determine whether the magnetic field information obtained through the magnetic sensor 151 is greater than or equal to the predetermined reference magnetic field information.

According to various embodiments of the present disclosure, the reference magnetic field information may signify information about the magnitude of a magnetic field, a magnetic force, or a critical value that is a reference for switching a communication unit in an inactive state to an active state. For example, the reference magnetic field information may be set to 180 $\mu$T.

According to various embodiments of the present disclosure, the reference magnetic field information may be set by a user, the electronic device 100, an external server, or the like. However, various embodiments of the present disclosure are not limited thereto.

According to various embodiments of the present disclosure, when the magnetic field information obtained through the magnetic sensor 151 is less than the reference magnetic field information (e.g., 180 $\mu$T), the electronic device 100 may continuously monitor magnetic field information of the vicinity of the electronic device 100 through the magnetic sensor 151 while maintaining a communication unit in an inactive state.

Referring to FIG. 6B, when the magnetic field information obtained through the magnetic sensor 151 is greater than or equal to the reference magnetic field, the electronic device 100 may search for the external device 200 by using at least one communication unit. For example, the electronic device 100 may receive information broadcasted by the external device 200 through a communication unit. The information broadcasted by the external device 200 may include at least one of the identification information of the external device 200 such as a product name, an ID, an identification code, state information of the external device 200, and information about a communication method supported by the external device 200. According to various embodiments of the present disclosure, the electronic device 100 may analyze received information to recognize the external device 200.

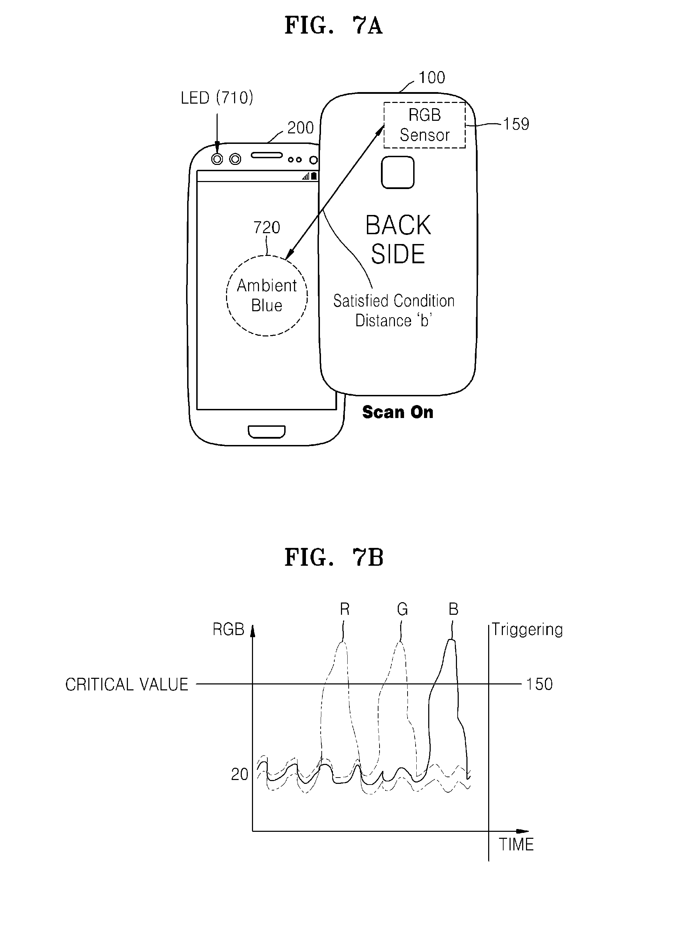

An example of activating a communication unit by the electronic device 100 based on color information measured by using a RGB sensor will be described below in detail with reference to FIGS. 7A and 7B.

FIGS. 7A and 7B are views schematically illustrating an example of scanning an external device based on color information measured by an RGB sensor according to an embodiment of the present disclosure.

Referring to FIGS. 7A and 7B, both of the electronic device 100 and the external device 200 are mobile terminals. The mobile terminal that is the external device 200 may include a Light Emitting Diode (LED) or a display unit for displaying an image.

As illustrated in FIG. 7A, the electronic device 100 may obtain color information via a RGB sensor 159. The RGB sensor 159 may be a sensor for detecting a color emitted from a light source. When a light sensor analyzes the three primary colors of light, the RGB sensor 159 may be referred to as a light sensor.

According to various embodiments of the present disclosure, the color information may include a color (e.g., red, green, blue, white, and the like), a color intensity value (e.g., 0-255), color pattern information, and the like. However, various embodiments of the present disclosure are not limited thereto.

According to various embodiments of the present disclosure, the electronic device 100 may compare the color information obtained through the RGB sensor 159 with preset reference color information. For example, the electronic device 100 may determine a similarity between the color information obtained through the RGB sensor 159 and the reference color information.

According to various embodiments of the present disclosure, the reference color information may signify the color (e.g., red, green, blue, white, and the like,) the color intensity value (e.g., 0-255), the color pattern information, and the like. For example, the reference color information may be a pattern in which a color change value is greater than or equal to a critical value in the order of red, green, and blue.

According to various embodiments of the present disclosure, the reference color information may be set by a user, the electronic device 100, an external server, and/or the like. However, various embodiments of the present disclosure are not limited thereto.

According to various embodiments of the present disclosure, the electronic device 100 may extract reference color information from the memory and compare the extracted reference color information with the color information obtained through the RGB sensor 159. When a similarity between the color information obtained through the RGB sensor 159 and the reference color information that may change in the order of, for example, red $\rightarrow$ green $\rightarrow$ blue, is less than a predetermined value, for example, 90%, the electronic device 100 maintaining the communication unit in an inactive state may continuously monitor color information there around through the RGB sensor 159.

As illustrated in FIG. 7B, when a similarity between the color information obtained through the RGB sensor 159 and the reference color information is greater than or equal to a predetermined value (e.g., a predetermined value of 90%), the electronic device 100 may search for the external device 200. In other words, if the similarity between the color information obtained through the RGB sensor 159 and the reference color information is greater than or equal to the predetermined value (e.g., the predetermined value of 90%), the electronic device 100 may determine that a predetermined event related to a device scan has occurred.

For example, according to various embodiments of the present disclosure, when the color information obtained through the RGB sensor 159, which may change in the order of, for example, red $\rightarrow$ green $\rightarrow$ blue, matches the reference color information that may change in order of, for example, red $\rightarrow$ green $\rightarrow$ blue, the electronic device 100 may switch the communication unit in an inactive state to an active state. According to various embodiments of the present disclosure, the electronic device 100 may receive information about the external device 200 and information about a requested service from the external device 200.

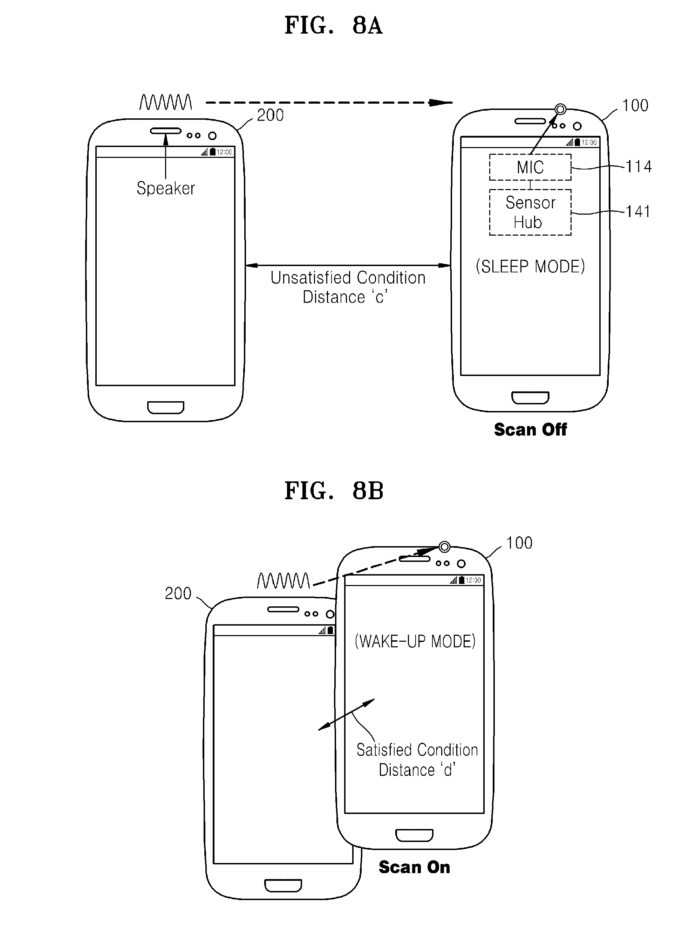

In the following description, a method of detecting, by the electronic device 100, an occurrence of a predetermine event related to a device scan by using sound information obtained through a microphone will be described below in detail with reference to FIGS. 8A and 8B.

FIGS. 8A and 8B are views schematically illustrating an example of scanning an external device based on sound information obtained through a microphone according to an embodiment of the present disclosure.

Referring to FIGS. 8A and 8B, the electronic device 100 may obtain sound information through the microphone 114. For example, the sound information may be emitted by a speaker of the external device 200. The microphone 114 of the electronic device 100 may be connected to a sensor hub 141 to be always in an active state. According to various embodiments of the present disclosure, the sound information may be information about a sound signal pattern, a cycle of receiving a sound signal, and the like.

The electronic device 100 may compare the sound information obtained through the microphone 114 with the preset reference sound information. For example, the electronic device 100 may determine a similarity between the sound signal pattern received through the microphone 114 and the preset reference sound signal pattern.

According to various embodiments of the present disclosure, the reference sound information may signify information about a sound signal pattern (e.g., a predetermined voice), or a sound signal receiving cycle which is a standard for switching the communication unit in an inactive state to an active state. According to various embodiments of the present disclosure, the reference sound information may be set by a user, the electronic device 100, an external device, and/or the like. However, various embodiments of the present disclosure are not limited thereto.

According to various embodiments of the present disclosure, the electronic device 100 may extract reference sound information from the memory and compare the extracted reference sound information with the sound information obtained through the microphone 114. According to various embodiments of the present disclosure, because the microphone 114 is connected to the sensor hub 141, the sensor hub 141 may compare the sound information obtained through the microphone 114 with the reference sound information.

According to various embodiments of the present disclosure, when a similarity between the sound information obtained through the microphone 114 with the reference sound information is less than a predetermined value (e.g., a predetermined value equal to 90%), the electronic device 100 maintaining the communication unit in an inactive state may continuously monitor ambient sound information through the microphone 114.

When a similarity between the sound information obtained through the microphone 114 and the reference sound information is greater than or equal to a predetermined value (e.g., a predetermined value of 90%), the electronic device 100 may switch at least one communication unit to an active state. In other words, if the similarity between the sound information obtained through the microphone 114 and the reference sound information is greater than or equal to the predetermined value (e.g., the predetermined value of 90%), the electronic device 100 may determine that a predetermined event related to a device scan has occurred.

For example, according to various embodiments of the present disclosure, when the sound information obtained through the microphone 114 matches the reference sound information, the electronic device 100 may scan the external device 200.

While examples of scanning the external device 200 by the electronic device 100 when a predetermined event has occurred have been described above with reference to FIGS. 5A through 8, according to various embodiments of the present disclosure, the electronic device 100 may also always scan the external device 200 regardless of whether a predetermined event has occurred or not. For example, when the communication unit, which is always in an active state, is connected to the sensor hub 141, the electronic device 100 may continuously receive identification information, information about a requested service or the like from the nearby external device 200.

Hereinafter, a method of displaying an object related to the external device 200 by the electronic device 100 when a service requested by the external device 200 is available will be described in detail with reference to FIG. 9.

FIG. 9 is a flowchart illustrating a method of filtering an object related to an external device displayed on a screen and providing a requested service via a communication link by an electronic device according to an embodiment of the present disclosure.

Referring to FIG. 9, at operation S910, the electronic device 100 may scan the external device 200 via short-range communication (e.g., BLE communication, sound communication, and the like). For example, the electronic device 100 may receive information about the external device 200 that is broadcasted by the external device 200 or information about a requested service or the like. As an example, operation S910 may correspond to operation 210 of FIG. 2, and thus, a detailed description thereof will be omitted.

At operation S920, the electronic device 100 may determine whether a service requested by the external device 200 may be provided.

According to the present embodiment, the electronic device 100 may determine whether a requested service may be provided or not by considering information about a function supported by the electronic device 100 or state information of the electronic device 100, or the like. When the electronic device 100 determines that a requested service is not available at operation S920, the electronic device 100 may not display an object related to the external device 200 on a screen. For example, when the electronic device 100 determines that a requested service is not available at operation S920, the electronic device 100 may return to operation S910.

For example, although the external device 200 requests BLE communication connection to the electronic device 100 via a BLE keyboard, if the electronic device 100 does not support BLE communication, the electronic device 100 is not able to provide a requested service, and thus, the electronic device 100 may not display an object related to a BLE keyboard on the screen.

According to various embodiments of the present disclosure, a sensor hub may determine whether a requested service is available or not. When the sensor hub determines that a requested service is not available, the sensor hub may not wake up an Application Processor (AP). Accordingly, as an AP may be in a sleep mode, the electronic device 100 may reduce power consumption by the AP.

In contrast, when the electronic device 100 determines that a requested service is available at operation S920, the electronic device 100 may proceed to operation S930 at which the electronic device 100 may display an object related to the external device 200 including information about a requested service, on the screen.

At operation S940, the electronic device 100 may receive an acceptance input of a user regarding a requested service. Because operations 930 and 940 respectively correspond to operations 220 and 230 of FIG. 2, detailed descriptions thereof will be omitted.

At operation S950, the electronic device 100 may establish a communication link via which data is to be transmitted or received to or from the external device 200.

According to various embodiments of the present disclosure, the electronic device 100 may establish a communication link through which data may be transmitted to or received from the external device 200 in consideration of capability information of the external device 200, communication connection information of the external device 200, and information about a preferred communication method by the external device 200, which are received from the external device 200.

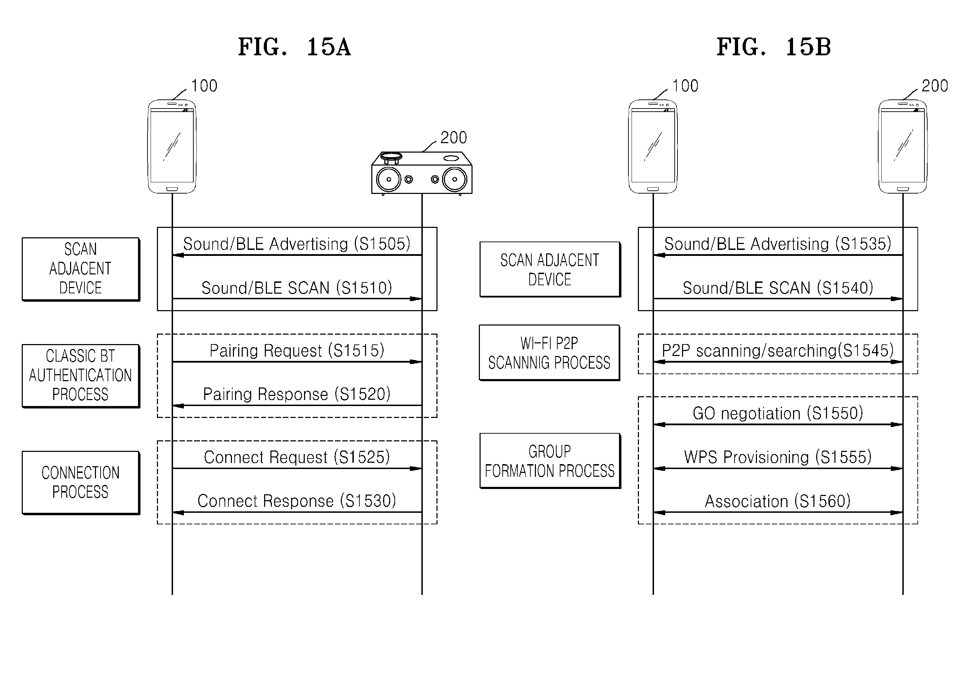

The communication link may be established by using the same communication method as the communication method through which advertisement information broadcasted by the external device 200 is received or through a different communication method (Out of Band) from the communication method through which the advertisement information is received. For example, when the electronic device 100 has received advertisement information broadcast by the external device 200 via BLE communication, the electronic device 100 may establish a communication link by using the same, BLE communication method or by using a Wi-Fi Direct communication method which is different from the BLE communication method. An operation of establishing a communication link by using an OOB method will be described in further detail later with reference to FIGS. 15A and 15B.

According to various embodiments of the present disclosure, the communication link may be a virtual communication link of a non-connection method, in which advertising packets are transmitted or received by mutual scanning between the electronic device 100 and the external device 200, or may be a communication link of a connection method, in which a session is formed upon a connection request by the electronic device 100.

According to various embodiments of the present disclosure, the electronic device 100 may establish a Bluetooth communication link or a Wi-Fi communication link by exchanging connection information for establishing a communication link (e.g., a SSID, an IP address, a MAC address, a channel number, a security key, a BT address, a product name, profile information, and the like), through an advertisement channel.

At operation S960, the electronic device 100 may provide a requested service to the external device 200 via a communication link. As an example, operation 960 corresponds to operation 240 of FIG. 2, and thus, a detailed description thereof will be omitted.

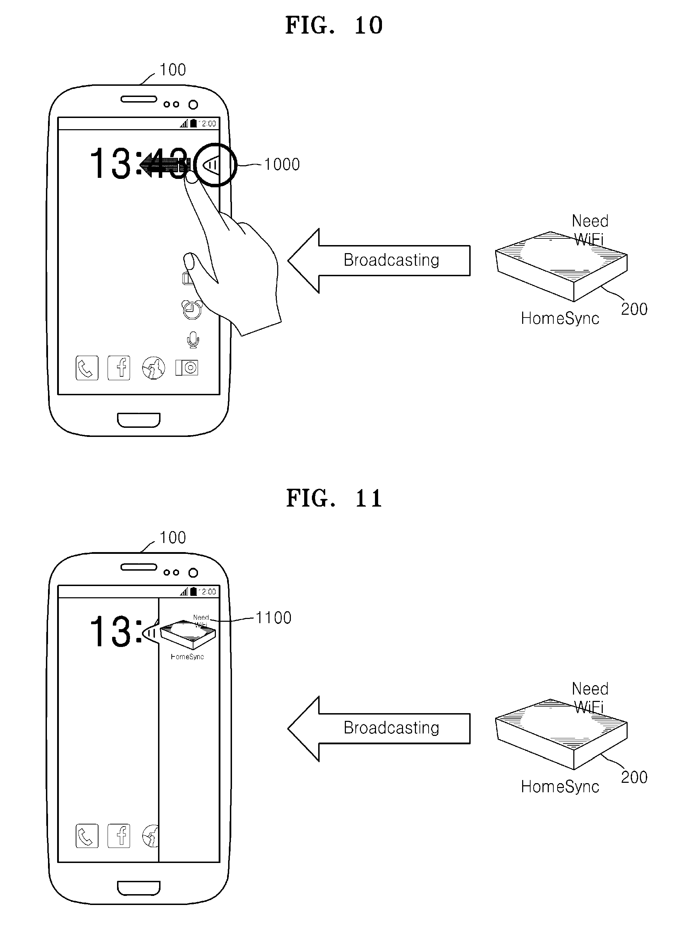

According to various embodiments of the present disclosure, an order of operations 910 through 960 may be modified, or some of operations may be omitted. Hereinafter, an example of displaying an object related to the external device 200, by the electronic device 100, will be described in detail with reference to FIGS. 10 through 12.

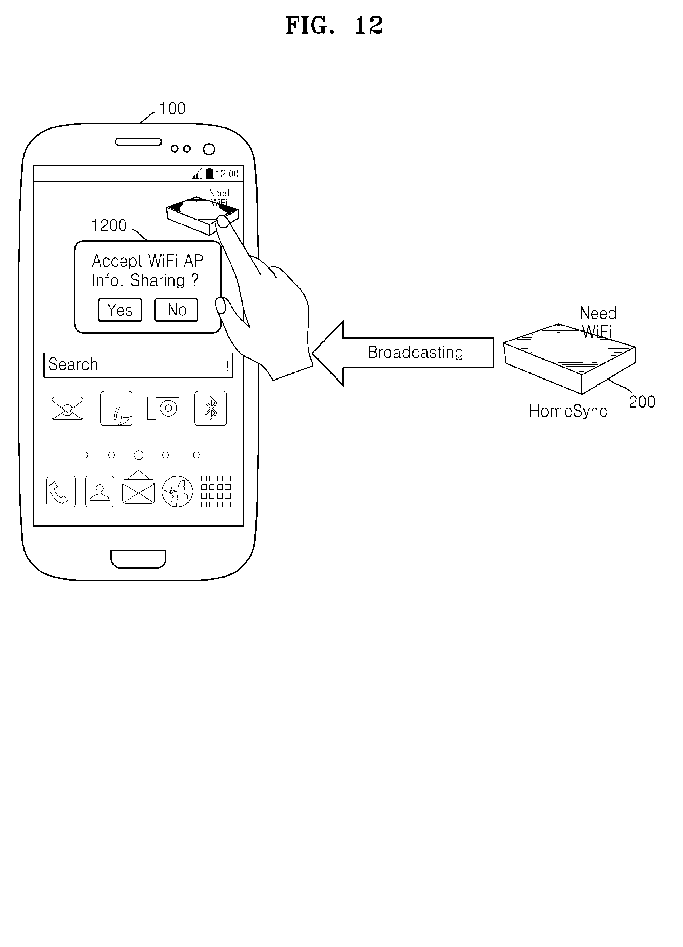

FIG. 10 is a view schematically illustrating an indicator that notifies that information about a requested service is received according to an embodiment of the present disclosure. FIG. 11 is a view schematically illustrating an object including information about an external device and information about a requested service according to an embodiment of the present disclosure. FIG. 12 illustrates an acceptance input window through which acceptance regarding a service requested by an external device is received according to an embodiment of the present disclosure.

Referring to FIGS. 10, 11, and 12, the electronic device 100 is a mobile device, and the external device 200 is a home sync.

As illustrated in FIG. 10, according to various embodiments of the present disclosure, when the external device 200 that broadcasts a requested service is found, the electronic device 100 may display on a screen an indicator 1000 that notifies that the service requested by the external device 200 (e.g., a request for Wi-Fi connection information) is present. According to various embodiments of the present disclosure, the electronic device 100 may display the indicator 1000 on the screen only when the requested service (e.g., a request for Wi-Fi connection information) is available.

A user may check that the external device 200 that broadcasts information about a requested service is found, through the indicator 1000.

Although FIG. 10 illustrates the indicator 1000 having a triangular shape displayed on the left side of the screen, various embodiments of the present disclosure are not limited thereto. For example, the indicator 1000 may be displayed in various shapes and at various positions. For example, the electronic device 100 may display the indicator 1000 in an upper portion of the screen (e.g., a status display window) or as a pop up window in a center of the screen.

Referring to FIG. 10, when the user drags the indicator 1000 to the left while touching the same, the electronic device 100 may display an object related to the external device 200 on the screen. According to various embodiments of the present disclosure, when the user taps (or double-taps) the indicator 1000, the electronic device 100 may display an object related to the external device 200.

As illustrated in FIG. 11, the electronic device 100 may display an object 1110 related to the external device 200 on a screen. The electronic device 100 may combine an identification image of the external device 200 and information about a requested service (e.g., Need WiFi) to generate the object 1110, and display the generated object 1110 on the screen. The identification image of the external device 200 may be received from the external device 200 or may be previously stored in a memory of the electronic device 100. When there is no identification image corresponding to the external device 200, the electronic device 100 may generate the object 1110 by combining a product name of the external device 200 with information about the requested service.

The user may check, through the object 1110 displayed on the screen, that a home sync is requesting Wi-Fi connection information. When the electronic device 100 wishes to provide a requested service to the external device 200, the user may touch the object 1110 displayed on the screen by using a touching instrument (e.g., a finger or electronic pen) to thereby accept the requested service This will be described below with reference to FIG. 12.

As illustrated in FIG. 12, according to various embodiments of the present disclosure, the electronic device 100 may directly display an object related to the external device 200 on the screen without displaying an indicator.

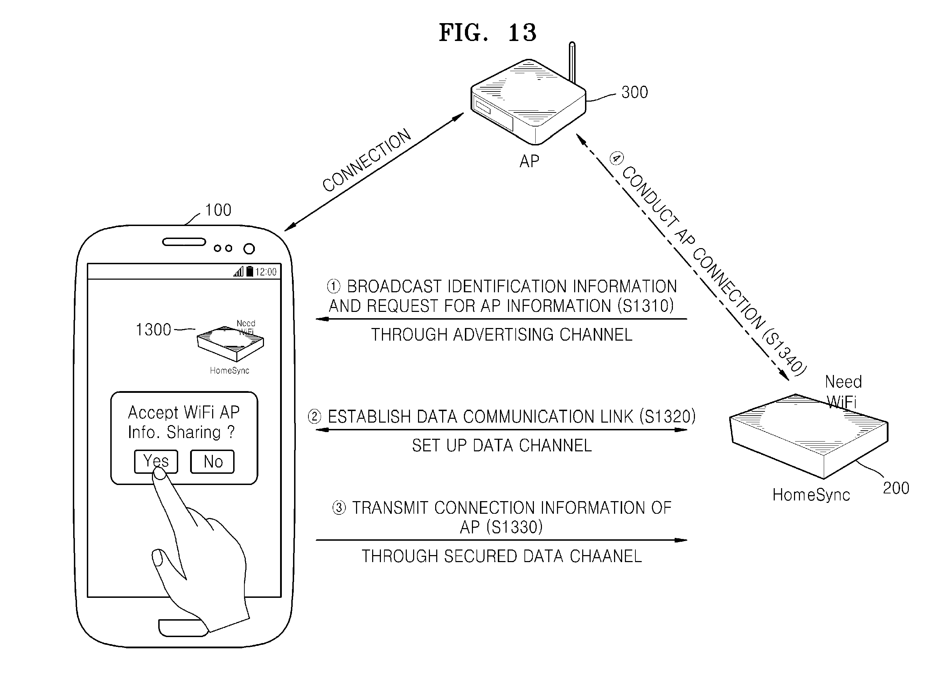

When the user selects an object displayed on the screen (e.g., by tapping, double-tapping, touching and holding, and/or the like) the electronic device 100 may display an acceptance input window 1200 on the screen. According to various embodiments of the present disclosure, specific information about a service requested by the external device 200 (e.g., a request for sharing WiFi access point connection information) may be displayed on the acceptance input window 1200. The user may input an acceptance or rejection message regarding provision of the requested service through the acceptance input window 1200. When the user accepts provision of the requested service, the electronic device 100 may provide the requested service to the external device 200. This will be described below with reference to FIG. 13.

FIG. 13 is a view schematically illustrating an example of sharing Access Point (AP) information an electronic device and an external device according to an embodiment of the present disclosure.

Referring to FIG. 13, at operation S1310, the external device 200 may broadcast information about the external device 200 (e.g., identification information or capability information) and information about a requested service (e.g., a request for sharing information of AP 300) at a predetermined cycle. The electronic device 100 may receive information broadcast by the external device 200. When the information of AP 300 is transmittable to the external device 200, the electronic device 100 may display an object 1300 related to the external device 200 on the screen. The electronic device 100 may receive from the user an acceptance input for sharing of the information of AP 300.

At operation S1320, the electronic device 100 may send a BLE connection request or a negotiation request to the external device 200. The electronic device 100 may embed at least one of identification information (e.g., device ID, MAC address, product name, and the like), capability information (e.g., BLE, Bluetooth, Ant+, Wi-Fi, NFC support, and the like) and information about a preferred communication method (e.g., Bluetooth) in an advertising packet and broadcast the same.

According to various embodiments of the present disclosure, the because the electronic device 100 is aware of the identification information of the external device 200, the electronic device 100 may request a BLE communication request by directly transmitting to the external device 200 the identification information (e.g., device ID, MAC address, product name, and the like), capability information (e.g., BLE, Bluetooth, Ant+, Wi-Fi, NFC support, and the like) and information about a preferred communication method (e.g., Bluetooth) by using the BLE communication method.

When the external device 200 receives identification information, capability information, and information about a preferred communication method of the electronic device 100 by using the BLE communication method and transmits a response message that expresses agreement on the BLE communication method to the electronic device 100, a BLE communication link may be established.

According to various embodiments of the present disclosure, the electronic device 100 or the external device 200 may establish a communication link by using another communication method than the BLE communication method, for example, Bluetooth, Wi-Fi Direct, and/or the like, through negotiation.

At operation S1330, the electronic device 100 may transmit connection information of the AP 300 to the external device 200 through the communication link. Examples of the connection information of the AP 300 include SSID, IP address, MAC address, a channel number, a security key, and the like. However, various embodiments of the present disclosure are not limited thereto. A security key is information needed to access the AP 300, and may be, for example, a key number input by a user.

When connection information of the AP 300 is stored in a memory, the electronic device 100 may transmit the stored connection information of the AP 300 to the external device 200 through the communication link. Meanwhile, if the connection information of the AP 300 is not stored in a memory, the electronic device 100 may search for the AP 300 nearby. The electronic device 100 may receive a security key for connecting to a found AP 300 (e.g., password). In this case, the electronic device 100 may transmit the connection information of the AP 300 (e.g., SSID, IP address, MAC address, channel number, security key, and/or the like) to the external device 200 through the communication link.

At operation S1340, the external device 200 may request connection to the AP 300 by using the connection information of the AP 300 received from the electronic device 100.

According to various embodiments of the present disclosure, when the external device 200 is a device not including an input unit, such as a home sync, a set top box, or a speaker, the external device 200 may not be able to receive a password for connecting to the AP 300 from the user. According to various embodiments of the present disclosure, the electronic device 100 may transmit security information (e.g., password) by using a low-power wireless communication method so that the external device 200 not including an input unit (e.g., a home sync) may be connected to another external device such (e.g., an access point).

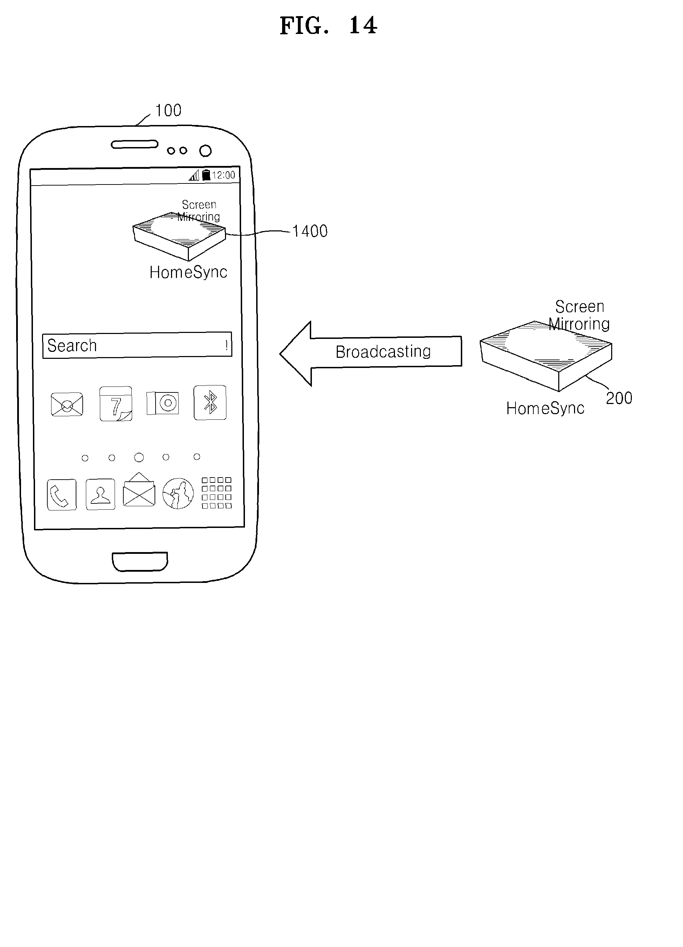

According to various embodiments of the present disclosure, when provision of the requested service by the electronic device 100 is completed, the external device 200 may broadcast information about another requested service. This will be described below with reference to FIG. 14.

FIG. 14 is a view schematically illustrating an example of broadcasting information about another requested service by an external device according to an embodiment of the present disclosure.

Referring to FIG. 14, in response to the request for sharing connection information of AP by the external device 200, when the electronic device 100 has transmitted connection information of AP to the external device 200, the external device 200 may connect to an AP. In this case, the external device 200 may use a Digital Living Network Alliance (DLNA) for media sharing within a home network.

DLNA refers to a type of protocol that allows transmission and reception of any contents such as music, photos, movies, between devices in a home. Devices such as PC, TV, phone, tablet, cameras, and the like, which are in the same IP band from among those equipped with network functions such as Ethernet, Wi-Fi, or Bluetooth share content via a wireless network, and not through a physical connection.

Accordingly, as the external device 200 does not have to request sharing of connection information of AP anymore, the external device 200 may modify information about a requested service and broadcast the same. For example, as illustrated in FIG. 14, the external device 200 may embed information for requesting mirroring instead of information for sharing connection information of AP, in an advertising packet and broadcast the same.

In this case, the electronic device 100 may receive advertisement information including a request about mirroring, from the external device 200. When the electronic device 100 supports Miracast which is a Wi-Fi-based Peer-To-Peer (P2P) standard, an object 1400 related to the external device 200 including a service requested by the external device 200 (e.g., a request for mirroring) may be displayed on the screen.

Unlike conventional Wi-Fi, Miracast provides a basis by which content or services may be used between devices through direct communication between terminals without an AP or a router.

FIGS. 15A and 15B are a view schematically illustrating an operation of establishing a data communication link via an Out Of Band (OOB) method by an electronic device 100 according to an embodiment of the present disclosure.

Referring to FIG. 15A, the electronic device 100 is assumed to be a mobile terminal and the external device 200 is assumed to be a wireless speaker.

At operation S1505, the wireless speaker, for example, the external device 200, may broadcast a sound signal including information about a service requested by the external device 200 and/or an advertising packet including information about the service requested by the external device 200, through a sound output unit and/or a BLE communication unit.

At operation S1510, the electronic device 100 may scan the external device 200 by using a microphone or the BLE communication unit. The electronic device 100 and the external device 200 may establish a sound communication link or a BLE communication link as a first communication link. The electronic device 100 may determine a Bluetooth communication method as a second communication method to communicate data via the first communication link.

At operation S1515, the electronic device 100 may request pairing with the external device 200. Pairing is a process of checking a password, identification information, security information, authentication information, and/or the like, which are set for mutual communication connection between the electronic device 100 and the external device 200 that support a Bluetooth function.

At operation S1520, the electronic device 100 may receive a pairing response. In other words, in response to the pairing request, the external device 200 may transmit personal identification information to the electronic device 100. An example of the personal identification information may be a Personal Identification Number (PIN) code, or the like. The personal identification information may be created just for a single use or stored in the memory. The electronic device 100 may determine whether the personal identification information matches the personal identification information received from the external device 200. When the personal identification information requested by the electronic device 100 matches the personal identification information received from the external device 200, the pairing between the electronic device 100 and the external device 200 may be completed.

At operation S51525, the electronic device 100 may make a Bluetooth connection request to the external device 200.

At operation S1530, the external device 200 may respond to the connection request by the electronic device 100. In this case, the external device 200 may establish a Bluetooth communication link with the external device 200. Because the process of establishing a Bluetooth communication link is a well-known technology, a detailed description thereof is omitted herein.

As illustrated in FIG. 15B, both the electronic device 100 and the external device 200 may be mobile terminals. Operations S1535 and S1540 of FIG. 15B may correspond to operations S1505 and S1510 of FIG. 15A, respectively. In other words, the electronic device 100 and the external device 200 may establish a sound communication link or a BLE communication link as the first communication link. The electronic device 100 may determine a WFD communication method as the second communication method for communicating data via the first communication link.

At operation S1545, the electronic device 100 may scan the external device 200 that includes a WFD function. When the external device 200 is scanned, the electronic device 100 may be connected to the external device 200 through forming of a group (one-to-one or one-to-many topology).

At operation S1550, the electronic device 100 may form a group with the external device 200. The electronic device 100 and the external device 200 may negotiate to determine a Peer-To-Peer Group Owner (P2P GO) and a P2P client that may serve as major roles of a group, and may set an operating channel to be used in the group.

At operation S1555, the electronic device 100 and the external device 200 may perform a Wi-Fi Protected Setup (WPS). In other words, the electronic device 100 and the external device 200 may exchange PIN information that is input by a device user through a keypad, and may perform a setup according to push button selection by a user.

At operation S1560, the electronic device 100 and the external device 200 may establish a WFD communication link. Because the process of establishing a WFD communication link is a well-known technology, a detailed description thereof will be omitted herein.

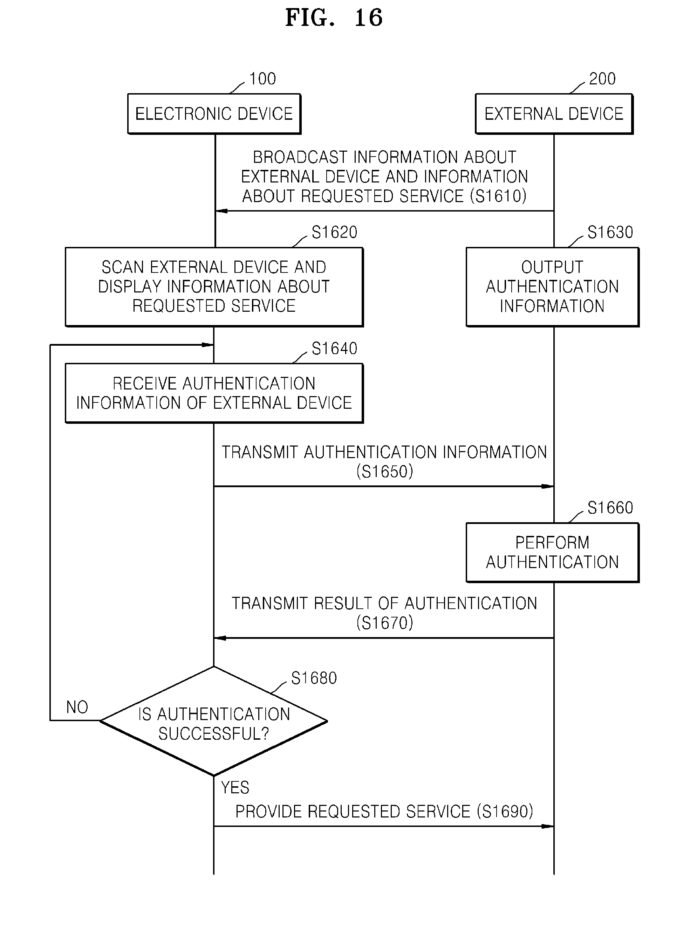

FIG. 16 is a flowchart illustrating a method of detecting an external device to which an electronic device is to provide a requested service according to an embodiment of the present disclosure.

At operation S1610, the external device 200 may broadcast information about the external device 200 (e.g., identification information, capability information or state information) and information about a requested service.

At operation S1620, the electronic device 100 may scan the external device 200. For example, the electronic device 100 may receive information about the external device 200 and information about a requested service via short-range communication (e.g., BLE, or the like). The electronic device 100 may display an object related to the external device 200 including information about a requested service, on a screen. For example, an object related to the external device 200 may be displayed on the screen in the form of an image of the external device 200 combined with a text indicating a requested service.

At operation S1630, the external device 200 may output authentication information on the screen. For example, the external device 200 may display personal identification information (e.g., PIN) on the screen. According to various embodiments of the present disclosure, the external device 200 may generate personal identification information (e.g., PIN) in the form of a two-dimensional barcode and display the two-dimensional barcode on the screen.

The two-dimensional barcode refers to a two-dimensional (matrix) type code containing various pieces of information in a rectangular checked pattern. An example of the two-dimensional barcode may be a Quick Response (QR) code.

At operation S1640, the electronic device 100 may receive authentication information output from the external device 200. Authentication information refers to information needed for the electronic device 100, which is a service providing subject, to authenticate (or identify) the external device 200, which is a service receiving subject. For example, when the electronic device 100 provides an authentication information input window, the electronic device 100 may receive, from a user, authentication information of the external device 200 through the authentication information input window.

According to various embodiments of the present disclosure, the electronic device 100 may convert a camera into an active state based on a user input and may recognize a two-dimensional barcode including authentication information (e.g., a QR code), by using the camera.

At operation S1650, the electronic device 100 may request authentication while transmitting the input authentication information to the external device 200.

At operation S1660, the external device 200 may perform authentication of the authentication information. For example, the external device 200 may perform authentication of the authentication information by comparing the authentication information received from the electronic device 100 and the authentication information output on the screen.

At operation S1670, the external device 200 may transmit a result of the authentication to the electronic device 100. For example, when the authentication information received from the electronic device 100 and the authentication information output on the screen correspond to each other, the external device 200 may transmit an authentication success message to the electronic device 100.

In contrast, when the authentication information received from the electronic device 100 and the authentication information output on the screen do not correspond to each other, the external device 200 may transmit an authentication failure message to the electronic device 100.

At operation S1680, the electronic device 100 may determine whether authentication is successful or not, based on the information of a result of the authentication received from the external device 200. When an authentication failure message is received from the external device 200, the electronic device 100 may not provide a requested service to the external device 200 which has transmitted the authentication failure message.

At operation S1690, when an authentication success message about the authentication information of the external device 200 that is input by a user is received, the electronic device 100 may provide a requested service to the external device 200. Operation 1690 corresponds to operation 240 of FIG. 2, and thus, a detailed description thereof will be omitted.

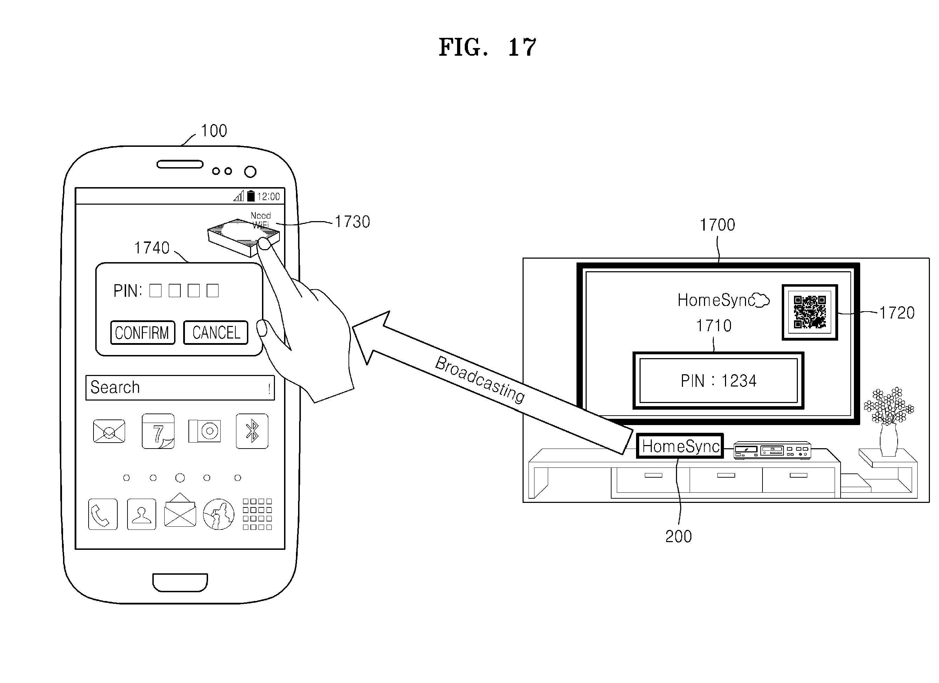

According to various embodiments of the present disclosure, the electronic device 100 may prevent provision of a corresponding service to an incorrect device which is not the external device 200 that has requested the service by making the service receiving subject clear by using authentication information. This will be described in detail with reference to FIG. 17.

FIG. 17 is a view schematically illustrating an example of outputting authentication information by an external device according to an embodiment of the present disclosure.

As illustrated in FIG. 17, while broadcasting information about the external device 200 and information about a requested service, the external device 200 may output authentication information to a display unit 1700. For example, the external device 200 may output personal identification information 1710 (e.g., PIN: 1234) a two-dimensional barcode 1720 containing authentication information, and/or the like.

The electronic device 100 that is located within a predetermined distance from the external device 200 may receive the information about the external device 200 and information about a requested service that are broadcasted by the external device 200. The electronic device 100 may display an object 1730 related to the external device 200 on a screen. A user may check the object 1730 related to the external device 200 displayed on the screen and touch the object 1730 to accept a requested service requested by the external device 200.

In this case, the electronic device 100 may display an authentication window 1740 through which authentication information of the external device 200 may be input on the screen, in order to make a service receiving subject clear. According to various embodiments of the present disclosure, the electronic device 100 may activate a camera so as to recognize (e.g., capture) the two-dimensional barcode 1720.

When the PIN 1710 (e.g., 1234) is input through the authentication window 1740 or when the two-dimensional barcode 1720 is recognized by using a camera, the electronic device 100 may request authentication while transmitting the input authentication information to the external device 200. According to various embodiments of the present disclosure, authentication means are not limited to the use of a PIN or a two-dimensional barcode.

When an authentication success message is received from the external device 200, the electronic device 100 may provide a service (e.g., sharing of AP connection information) requested by the external device 200 to the external device 200.

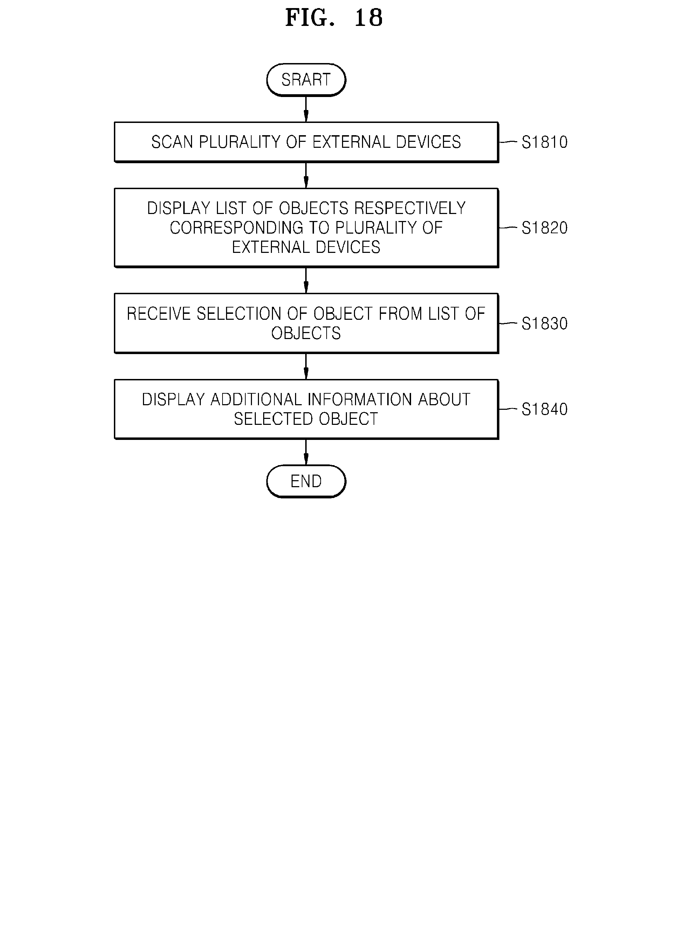

FIG. 18 is a flowchart illustrating a method of providing an object list by an electronic device according to an embodiment of the present disclosure.

At operation S1810, the electronic device 100 may scan a plurality of external devices that broadcast advertisement information. The electronic device 100 may receive from the external devices information about the external devices and information about a requested service.

At operation S 1820, the electronic device 100 may display a list of objects respectively corresponding to a plurality of external devices on a screen. According to various embodiments of the present disclosure, the electronic device 100 may display only those objects related to external devices that request an available service, on the list of objects.

At operation S1830, the electronic device 100 may receive a selection input for selecting one object from the list of objects. According to various embodiments of the present disclosure, a selection input may be a user input for requesting additional information. For example, a user may touch an object from among the list of objects for a predetermined period of time (e.g., three seconds), to request the electronic device 100 for additional information about the object.

At operation S1840, the electronic device 100 may display the additional information corresponding to the selected object for a predetermined period of time. The additional information may include specific information about a requested service, state information of the external device 200, and capability information of the external device 200.

According to various embodiments of the present disclosure, the electronic device 100 may also receive an acceptance input for providing a requested service included in the selected object by a user.

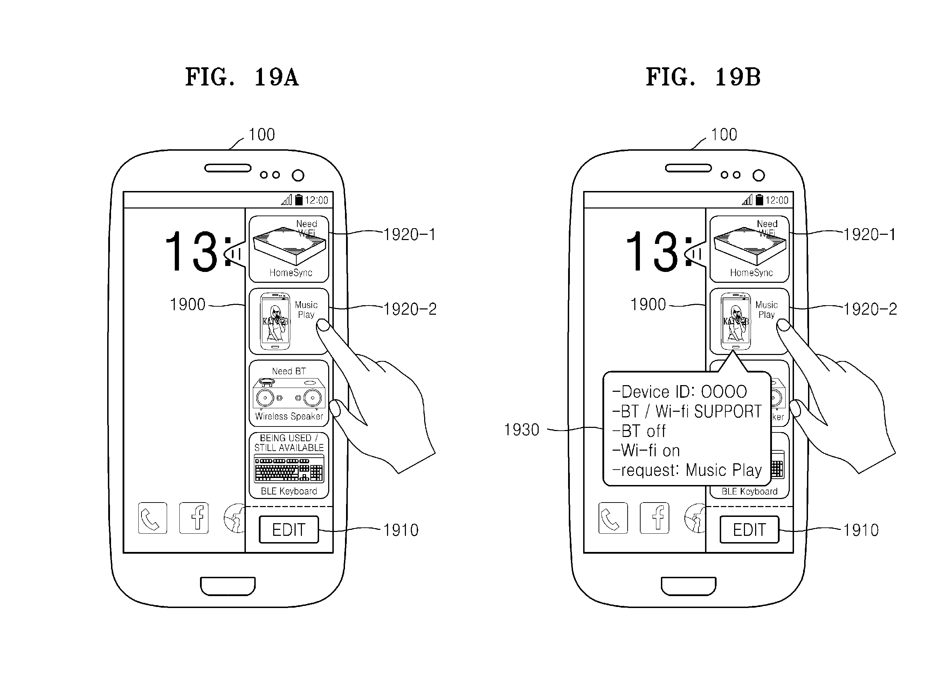

Hereinafter, a method of providing an object list by the electronic device 100 will be further described in detail with reference to FIGS. 19A and 19B.

FIGS. 19A and 19B illustrate a Graphical User Interface (GUI) for providing an object list and additional information corresponding to an object selected from the object list according to an embodiment of the present disclosure.

Referring to FIG. 19A, when a plurality of external devices are found, the electronic device 100 may display an object list 1900 including objects respectively corresponding to the plurality of external devices on the screen (e.g., objects 1920-1, 1920-2, and the like).

According to various embodiments of the present disclosure, a user may modify an order of arrangement of objects displayed in the object list 1900 or delete at least one object using an editing button 1910.

Referring to FIG. 19B, the electronic device 100 may receive a selection input of a user regarding an object 1920-2 from the object list 1900. In this case, the electronic device 100 may display additional information 1930 corresponding to the selected object 1920 on the screen.

For example, when a user selects the object 1920-2 displaying 'mobile phone image + Music Play' from the object list 1900, the electronic device 100 may display identification information of a mobile phone (e.g., device ID: OOOO), capability information of the mobile phone (e.g., BT/Wi-Fi support), state information of a mobile phone (e.g., BT off / Wi-Fi on), information about a requested service (e.g., a request for replaying music), and/or the like.

A user may check additional information 1930 corresponding to the selected object 1920-2 and accept a requested service. In this case, the electronic device 100 may provide a requested service to the external device 200. For example, the electronic device 100 may establish a communication link with the external device 200 and may transmit predetermined music or video contents to the external device 200. In this case, the external device 200 may replay music or video content.

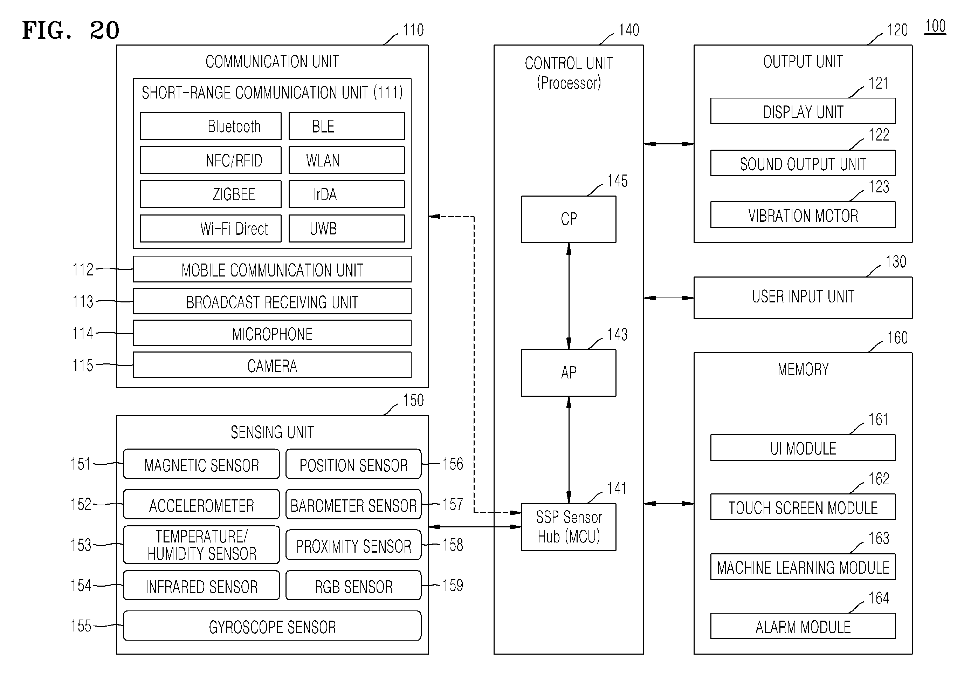

FIG. 20 is a block diagram schematically illustrating a structure of an electronic device according to an embodiment of the present disclosure.

Referring to FIG. 20, the electronic device 100 may include a communication unit 110, an output unit 120, a user input unit 130, a control unit 140, a sensing unit 150, and a memory 160. However, according to various embodiments of the present disclosure, the above-identified elements are not all essential elements and the electronic device 100 may be embodied by more or less elements than the above elements.

These elements are described below in detail.

The communication unit 110 may include one or more elements for allowing communication between the electronic device 100 and an external device 200 or between the electronic device 100 and a server. For example, the communication unit 110 may include a short range communication unit 111, a mobile communication unit 112, a broadcast receiving unit 113, a microphone 114, and a camera 115.

The short range communication unit 111 may include a Bluetooth communication unit, a BLE communication unit, an NFC/RFID unit, a Wi-Fi communication unit, a ZigBee communication unit, an IrDA communication unit, a WFD communication unit, an UWB communication unit, an Ant+ communication unit, and the like. However, various embodiments of the present disclosure are not limited thereto.

The mobile communication unit 112 communicates a wireless signal with at least one of a base station, an external terminal, and a server on a mobile communication network. The wireless signal may include various types of data according to communication of a sound call signal, a video call signal, a text/multimedia message, and/or the like.

The broadcast receiving unit 113 receives a broadcast signal and/or information related to broadcasting by the outside through a broadcast channel. The broadcast channel may include a satellite channel and a ground wave channel. According to various embodiments of the present disclosure, the electronic device 100 may not include the broadcast receiving unit 113.

The microphone 114 receives an input of an external sound signal and processes the received sound signal to electrical sound data. For example, the microphone 114 may receive a sound signal transmitted by the external device 200. The sound signal transmitted by the external device 200 may include the identification information of the external device 200, the state information of the external device 200, and information about a communication method preferred by the external device 200, and/or the like. However, various embodiments of the present disclosure are not limited thereto. According to various embodiments of the present disclosure, the microphone 114 may transmit the processed sound data to the control unit 130.

The camera 115 may obtain (e.g., capture) an image frame such as a still image or a moving picture through an image sensor in a video call mode or a photographing mode. An image captured through the image sensor may be processed by the control unit 140 or a separate image processing unit (not shown). For example, the camera 115 may recognize a one-dimensional barcode, a two-dimensional barcode (e.g., a QR code), a three-dimensional barcode, a color code, a gray code, and the like, which are displayed on the screen of the external device 200.

The communication unit 110 may scan the external device 200 that provides identification information or information about a requested service. According to various embodiments of the present disclosure, the communication unit 110 may communicate data with the external device 200. For example, the communication unit 110 may receive information broadcasted by the external device 200, for example, the identification information of the electronic device 100, information about a communication method, and/or the like. According to various embodiments of the present disclosure, the communication unit 110 may request a communication connection or negotiation request for determining a communication method from the external device 200 based on the information broadcasted by the external device 200.

According to various embodiments of the present disclosure, the communication unit 110 may be connected to a sensor hub 141. According to various embodiments of the present disclosure, the communication unit 110 may transmit information about the external device 200 or information about a service requested by the external device 200, which is received from the external device 200, to the sensor hub 141.

According to various embodiments of the present disclosure, the communication unit 110 may transmit communication connection information for connecting to another external device, to the external device 200 via a communication link. According to various embodiments of the present disclosure, the communication unit 110 may transmit an authentication request including authentication information of the external device 200 to the external device 200, and receive a result of authentication according to the authentication request, from the external device 200.

The output unit 120 outputs an audio signal, a video signal or a vibration signal and may include a display unit 121, a sound output unit 122, a vibration motor 123, and/or the like.

The display unit 121 outputs and displays information that is processed by the electronic device 100. For example, the display unit 121 may display an object including information about the external device 200 and information about a requested service. The display unit 121 may selectively display an object on the screen based on a result of determining whether a service requested by the external device 200 is available. The display unit 121 may display additional information corresponding to an object selected by a user for a predetermined period of time.

According to various embodiments of the present disclosure, when the external device 200 includes a plurality of devices, the display unit 121 may display an object list of objects respectively corresponding to the plurality of devices. According to various embodiments of the present disclosure, when the scanning of the external device 200 fails, the display unit 121 may display on the screen a message indicating the connection (or scanning) failure. According to various embodiments of the present disclosure, the display unit 121 may provide on the screen an application related to the external device 200. For example, the display unit 121 may display on the screen a control application for controlling the external device 200 or information about a connection state with the external device 200.

When the display unit 121 and a touch pad form a touch screen in a layer structure, the display unit 121 may be used as an input device in addition to an output device. The display unit 121 may include at least one of a liquid crystal display, a thin film transistor-liquid crystal display, an organic light-emitting diode, a flexible display, a 3D display, and an electrophoretic display. According to various embodiments of the present disclosure, the electronic device 100 may include two or more display units. The two or more display units may be arranged to face each other by using a hinge. According to various embodiments of the present disclosure, when the display unit 121 is a flexible display, the two or more display units may not include a hinge.

The sound output unit 122 outputs audio data received from the communication unit 110 or stored in the memory 160. According to various embodiments of the present disclosure, the sound output unit 122 outputs a sound signal related to a function performed by the electronic device 100 (e.g., a call signal receiving sound, a message receiving sound, and/or the like). The sound output unit 122 may include a speaker, a buzzer, and/or the like.

According to various embodiments of the present disclosure, sound output unit 122 may transmit a sound signal embedded with information to the external device 200. For example, the electronic device 100 may embed identification information of the electronic device 100 in an inaudible range of a sound signal, capability information of the electronic device 100, information about a preferred communication method by the electronic device 100, or state information of the electronic device 100, and may broadcast the sound signal to the outside via the sound output unit 122.

The vibration motor 123 may output a vibration signal. For example, the vibration motor 123 may output a vibration signal corresponding to the output of audio data or video data (e.g., a call signal receiving sound, a message receiving sound, and/or the like). According to various embodiments of the present disclosure, the vibration motor 123 may output a vibration signal when a touch is input to a touch screen.

The user input unit 130 is a device used by a user to input data to control the electronic device 100. For example, the user input unit 130 may be a keypad, a dome switch, a touch pad such as a capacitive overlay type, a resistive overlay type, an infrared beam type, a surface acoustic wave type, an integral strain gauge type, a piezoelectric type, a jog wheel, a jog switch, and/or the like. However, various embodiments of the present disclosure are not limited thereto.

The user input unit 130 may receive an acceptance input of a user for providing a requested service. According to various embodiments of the present disclosure, the user input unit 130 may receive a user selection regarding an object displayed on a screen or authentication information of the external device 200.

The control unit 140 controls overall operations of the electronic device 100. For example, the control unit 140 may execute programs stored in the memory 160 to thereby control the communication unit 110, the output unit 120, the user input unit 130, the control unit 140, the sensing unit 150, and the memory 160.

The control unit 140 may include a sensor hub 141 of a Seamless Sensing Platform (SSP). According to various embodiments of the present disclosure, the sensor hub 141 may be connected to the sensing unit 150 and may collect sensing information from the sensing unit 150. For example, the sensor sub 141 may obtain magnetic field information sensed by the magnetic sensor 151.

According to various embodiments of the present disclosure, the sensor hub 141 may compare a value of magnetic field information obtained through the magnetic sensor 151 and a value of predetermined reference magnetic field information. When the value of the magnetic field information obtained through the magnetic sensor 151 is greater than or equal to the value of the predetermined reference magnetic field information, the sensor hub 141 may wake up an application processor 143 from a sleep mode or convert the communication unit 110 in an inactive state to an active state.

According to various embodiments of the present disclosure, while monitoring color information sensed by the RGB sensor 159, when a similarity between the color information and reference color information is greater than or equal to a predetermined value (e.g., a predetermined value of 90%), the sensor hub 141 may wake up the application processor 143 from a sleep mode or switch the communication unit 110 in an inactive state to an active state. According to various embodiments of the present disclosure, when a similarity between the sound information obtained through the microphone 114 and the reference sound information is greater than or equal to a predetermined value (e.g., a predetermined value of 90%), the electronic device 100 may wake up the application processor 143 from a sleep mode or switch the communication unit 110 in an inactive state to an active state.

According to various embodiments of the present disclosure, the sensor sub 141 may be connected to the communication unit 110. The sensor sub 141 may collect information about the external device 200, information about a service requested by the external device 200 or the like via the communication unit 110. According to various embodiments of the present disclosure, the sensor hub 141 may determine whether the service requested by the external device 200 is available. When the requested service is available, the sensor hub 141 may wake up the application processor 143 from a sleep mode. The application processor 143 controls the output unit 120 to display an object regarding the external device 200 on the screen. Thus, because an Application Processor (AP) may be in a sleep mode, the power consumed by the electronic device 100 may be reduced. The SSP will be described in further detail below with reference to FIG. 21.

The control unit 140 may include the AP 143 and a Communication Processor (CP) 145. The AP 143 may control the execution of various applications stored in the memory 160. For example, the AP 143 may control the display unit 110 to selectively display an object related to the external device 200 according to a result of determining whether a service requested by the external device 200 is available.

The control unit 140 may provide a requested service to the external device 200 based on a user's acceptance input for providing the requested service. For example, the control unit 140 may establish a communication link with respect to the external device 200 based on information about an external device (e.g., capability information or communication connection information), and may provide the requested service to the external device 200 via the communication link. According to various embodiments of the present disclosure, the control unit 140 may control the communication unit 110 such that communication connection information for connecting to another external device (e.g., relay connection information) to the external device 200 via a communication link.

The sensing unit 150 may detect a state of the electronic device 100 or an ambient state of the electronic device 100 and transmit the detected information to the control unit 140.

The sensing unit 150 may include at least one of the magnetic sensor 151, an accelerometer sensor 152, a temperature/humidity sensor 153, an infrared sensor 154, a gyroscope sensor 155, a position sensor 156, for example, a Global Positioning System (GPS), a barometer sensor 157, a proximity sensor 158, and an RGB sensor 159 (e.g., an illuminance sensor), and/or the like. However, various embodiments of the present disclosure are not limited thereto. Because the function of each sensor may be intuitively inferred by one of ordinary skill from the name thereof, a detailed description thereof is omitted herein.

The sensing unit 150 may detect an occurrence of a predetermined event of triggering a device scan. For example, the sensing unit 150 may detect an event of unlocking a lock screen, an event of executing a preset application, an event of selecting a preset button, and/or the like. However, various embodiments of the present disclosure are not limited thereto.

The memory 160 may store a program for processing and controlling the control unit 140 or input/output data, for example, reference magnetic field information. The memory 160 may include a storage medium of at least one type of a flash memory, a hard disk, a multimedia card micro, a card type memory such as an SD or XD card memory, Random Access Memory (RAM), Static Random Access Memory (SRAM), Read-Only Memory (ROM), Electrically Erasable Programmable Read-Only Memory (EEPROM), Programmable Read-Only Memory (PROM), a magnetic memory, a magnetic disc, and an optical disc. The memory 160 may be or otherwise include a non-transitory computer-readable storage medium. According to various embodiments of the present disclosure, the electronic device 100 may run a web storage or a cloud server that performs a storage function of the memory 160 on the Internet.

The programs stored in the memory 160 may be classified into a plurality of modules according to their functions, for example, into a User Interface (UI) module 161, a touch screen module 162, a machine learning module 163, an alarm module 164, and/or the like.

The UI module 161 may provide a specialized UI or Graphical User Interface (GUI) in connection with the electronic device 100 for each application. The touch screen module 162 may detect a user's touch gesture on the touch screen and transmit information related to the touch gesture to the control unit 130. According to various embodiments of the present disclosure, the touch screen module 162 may recognize and analyze a touch code. The touch screen module 162 may be configured by additional hardware including a controller.

Various sensors may be provided in the touch screen or around the touch screen to detect a touch or a proximate touch on the touch screen. A tactile sensor is an example of a sensor to detect a touch on the touch screen. The tactile sensor refers to a sensor that detects a touch of a particular object to a degree that one may sense or higher. The tactile sensor may detect various pieces of information such as roughness of a contact surface, hardness of a contact object, a temperature of a contact point, and/or the like.

Another example of a sensor for detecting a touch on the touch screen is a proximity sensor. A proximity sensor is a sensor for detecting an object which is approaching a predetermined detection surface or a neighboring object by using the strength of an electromagnetic field or an infrared light. Examples of the proximity sensor include a transmission-type photoelectric sensor, a direct reflection-type photoelectric sensor, a mirror reflection-type photoelectric sensor, a highfrequency oscillation proximity sensor, an electrostatic capacity-type proximity sensor, a magnetic-type proximity sensor, an infrared proximity sensor, and the like. Touch gestures of a user may include a tap, a touch and hold, a double-tap, a drag, panning, a flick, a drag-and-drop, a swipe, and the like.

"Tapping" is a user's motion of touching a screen by using a finger or a touch tool such as an electronic pen (such as a stylus pen) and then instantly lifting the finger or the touch tool from the screen without moving the finger or the touch tool on the screen.

"Touching & holding" is a user's motion of touching a screen by using a finger or a touch tool such as an electronic pen and then maintaining the above touching motion for a period longer than a critical (e.g., threshold) time (e.g., 2 seconds), after touching the screen. In other words, a time difference between a touch-in time and a touch-out time is greater than or equal to the critical time, for example, 2 seconds. When a touch input lasts over the critical time, in order to remind the user whether the touch input is tapping or touching & holding, a feedback signal may be provided in a visual, acoustic, or tactile manner. The critical time may vary according to various embodiments of the present disclosure.

"Double tapping" is a user's motion of touching the screen twice by using a finger or a touch tool (such as a stylus pen).

"Dragging" is a user's motion of touching the screen by using a finger or a touch tool and moving the finger or the touch tool to other position on the screen while keeping the touching motion. The dragging motion may enable the moving or panning motion of an object, which will be described later.

"Panning" is a user's motion of performing a dragging motion without selecting an object. Because no object is selected in the panning motion, no object is moved in a page but the page itself is moved on the screen or a group of objects may be moved within a page.

"Flicking" is a user's motion of performing a dragging motion with a speed higher than a critical (e.g., threshold) speed (e.g., 100 pixel/s), by using the finger or a touch tool. The dragging (panning) motion or the flicking motion may be distinguished from each other based on whether the moving speed of the finger or the touch tool is higher than the critical speed, for example, 100 pixel/s, or not.

"Dragging & Dropping" is a user's motion of dragging an object to a predetermine position on the screen by using the finger or a touch tool and then dropping the object at that position.

"Pinching" is a user's motion of moving two fingers touching the screen in opposite directions. The pinching motion is a gesture to magnify (open pinch) or contract (close pinch) an object or a page. A magnification value or a contraction value is determined according to the distance between the two fingers.

"Swiping" is a user's motion of touching an object on the screen by using the finger or a touch tool and simultaneously moving the object horizontally or vertically by a predetermine distance. A swiping motion in a diagonal direction may not be recognized as a swiping event.

The memory 160 may include a voice recognition module (not shown) that recognizes the voice of a user by using a voice recognition engine and transmits the recognized voice to the control unit 140.

The machine learning module 163 is a module that instructs the electronic device 100 to determine whether a magnetic substance exists around the magnetic sensor 151 by using magnetic field information obtained from the magnetic sensor 151. The machine learning module 163 according to the present embodiment may use a Support Vector Machine (SVM) method. According to the SVM method, when data of white circles and black circles are given for learning use, the white and black circles are classified into a white circle group and a black circle group mainly based on data, for example, a support vector, located at a boundary between the two groups.

The alarm module 164 may generate a signal notifying an occurrence of an event of the electronic device 100. As an example, the event occurring in the electronic device 100 may be receiving a call signal, receiving a message, input of a key signal, notification of a schedule, and/o the like. The alarm module 164 may output a notice signal in the form of a video signal through the display unit 121, a notice signal in the form of an audio signal through the sound output unit 122, a notice signal in the form of a vibration signal through the vibration motor 123, and/or the like.

The alarm module 164 may have a snooze function. For example, when a user sets a notice repetition number to, for example, 5 times, or a notice repetition interval to, for example, 3 minutes, the alarm module 164 may output a notice signal a predetermined number of times, for example, 5 times, at predetermined intervals, for example, 3 minutes.

FIG. 21 is a view schematically illustrating a data communication protocol of a Seamless Sensing Platform (SSP) according to an embodiment of the present disclosure.

Referring to FIG. 21, the SSP may include the sensor hub 141 and an SSP manager 142. The sensing unit 150 may be attached on the sensor hub 141 and the SSP manager 142 may be included in a framework of the AP 143.

Accordingly, the sensor hub 141 may receive magnetic field information (e.g., the direction of a magnetic field, the magnitude of a magnetic field, a magnetic force, and the like), color information, and/or the like. According to various embodiments of the present disclosure, the sensor hub 141 may collect information about the external device 200, information about a service requested by the external device 200, or sound information through the communication unit 110. At operation S10, when the AP 143 in a sleep mode needs to wake up, for example, when a requested service is available, the sensor hub 141 may send an interrupt signal to the SSP manager 142 to notify that there is data to be sent.

At operation S20, the SSP manager 142 may send to the sensor hub 141 a signal requesting data type and length.

According to various embodiments of the present disclosure, at operation S30, the sensor hub 141 may send to the SSP manager 142 content regarding the data type and length.

At operation S40, the SSP manager 142 may send a receiving ready message (Start to Read MSG) to the sensor hub 141.

At operation S50, receiving the Start to Read MSG, the sensor hub 141 may process the magnetic field information, information related to the communication unit to be switched to an active state, and the like into a predetermined packet and send the processed information to the SSP manager 142. In this case, the AP 143 wakes up from the sleep mode.

Various embodiments of the present disclosure can also be embodied as computer readable codes on a non-transitory computer readable recording medium. The non-transitory computer readable recording medium is any data storage device that can store data which can be thereafter read by a computer system. Examples of the computer readable recording medium include ROM, RAM, CD-ROMs, magnetic tapes, floppy disks, optical data storage devices, and the like. The non-transitory computer readable recording medium can also be distributed over network coupled computer systems so that the non-transitory computer readable code is stored and executed in a distributed fashion. In addition, functional programs, codes, and code segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1. A method of providing, by an electronic device, a service to an external device, the method comprising:

    receiving, from the external device, information about the external device and information about a service requested by the external device;
    displaying on a screen an object including the information about the external device and the information about the service requested by the external device;
    receiving an acceptance input of a user for providing the service requested by the external device; and
    providing the service requested by the external device to the external device based on the acceptance input.

2. The method of claim 1, wherein the information about the external device comprises at least one of identification information of the external device, capability information of the external device, state information of the external device, and communication connection information of the external device.

3. The method of claim 1, wherein the receiving of the information about the external device and information about the service requested comprises:

    receiving the information about the external device and the information about the service requested by the external device by using at least one of a Bluetooth low energy (BLE) communication method, a Near Field communication (NFC) method, an ANT+ communication method, a Zigbee communication method, and a sound communication method.

4. The method of claim 1, wherein the displaying of the object comprises:

    determining whether the service requested by the external device is available; and
    selectively displaying the object on the screen according to the determination as to whether the service requested is available.

5. The method of claim 1, wherein the providing of the service requested by the external device comprises:

    establishing a communication link with the external device based on the information about the external device; and
    providing the service requested by the external device to the external device through the communication link.

6. The method of claim 5, wherein the providing of the service requested by the external device comprises:

    transmitting, to the external device through the communication link, communication connection information for connecting to another external device.

7. The method of claim 5, wherein the providing of the service requested by the external device comprises:

    transmitting a predetermined content to the external device through the communication link.

8. The method of claim 1, wherein the providing of the service requested by the external device comprises:

    receiving authentication information of the external device;
    transmitting to the external device an authentication request including the authentication information of the external device;
receiving from the external device a result of authentication regarding the authentication request; and
providing the service requested by the external device to the external device based on a result of the authentication.

9. The method of claim 8, wherein the providing of the service requested by the external device based on a result of the authentication comprises:

requesting, when authentication is successful, a communication connection to the external device.

10. The method of claim 1, wherein the displaying of the object comprises:

receiving a selection input of the user regarding the object displayed on the screen; and
displaying additional information corresponding to the object based on the selection input of the user.

11. The method of claim 10, wherein the selection input of the user comprises a touch input of touching the object for a threshold period of time or longer.

12. The method of claim 1, wherein the displaying of the object on a screen comprises:

when the external device comprises a plurality of devices, displaying an object list that includes objects respectively corresponding to the plurality of devices.

13. The method of claim 12, wherein the receiving of the acceptance input of the user comprises:

receiving a selection of at least one object from the object list; and
receiving an acceptance input of the user for providing a requested service included in the selected object.

14. An electronic device comprising:

a communication unit configured to receive, from the external device, information about an external device and information about a service requested by the external device;
a display unit configured to display on a screen an object including the information about the external device and the information about the service requested by the external device;
a user input unit configured to receive an acceptance input of a user for providing the service requested by the external device; and
a control unit configured to provide the service requested by the external device to the external device based on the acceptance input.

15. A non-transitory computer readable recording medium having embodied thereon a program for implementing the method of claim 1.

FIG. 1

# FIG. 2

START

RECEIVE INFORMATION ABOUT EXTERNAL DEVICE AND INFORMATION ABOUT SERVICE REQUESTED BY EXTERNAL DEVICE ⎯ S210

DISPLAY OBJECT INCLUDING INFORMATION ABOUT EXTERNAL DEVICE AND INFORMATION ABOUT SERVICE REQUESTED BY EXTERNAL DEVICE ⎯ S220

RECEIVE ACCEPTANCE INPUT OF USER FOR PROVIDING SERVICE REQUESTED BY EXTERNAL DEVICE ⎯ S230

PROVIDE SERVICE REQUESTED BY EXTERNAL DEVICE TO EXTERNAL DEVICE ⎯ S240

END

EP 2 816 498 A1

# FIG. 3

200

200-1 — HomeSync

or

200-2 — Wireless Speaker

or

200-3 — BLE Keyboard

or

200-4 —

Sound | BLE | NFC

Broadcasting

300

| Preamble |
| Access Address |
| Header |
| Payload Length |
| Name Type 'GT-I9400' — 310 |
| Company ID '0x0075' — 320 |
| Protocol ID '0x0201' — 330 |
| Requested Service (Supported Features) — 340 |
| Capability (Supported Connectivity) — 350 |
| State (Current State) — 360 |
| CRC |

# FIG. 4

START

DETECT OCCURRENCE OF PREDETERMINED
EVENT RELATED TO DEVICE SCAN — S410

CONVERT COMMUNICATION UNIT FROM
INACTIVE STATE TO ACTIVE STATE — S420

SCAN EXTERNAL DEVICE
(RECEIVE INFORMATION ABOUT REQUESTED SERVICE) — S430

END

FIG. 5C

FIG. 5B

FIG. 5A

100

520

510

100

100

13:43

Ga

Galaxy

Sm

See all

Ex) "Please keep pressing a volume down key of the counterpart device"

Address, Name, Service, Capability

Repetitive Advertising

Sound /BLE scan

200-1

HomeSync

200-2

Wireless Speaker

200-3

BLE Keyboard

## FIG. 6A

200

Satisfied Condition
Distance 'a'

100

Lock
Screen

151

Magnetic
Sensor

Mic. Available
Mic. On

## FIG. 6B

B(μT)

185~200uT Triggering

CRITICAL VALUE — 180μT

40~60uT

TIME

# FIG. 7A

LED (710)

200

720

Ambient
Blue

100

RGB
Sensor

159

BACK
SIDE

Satisfied Condition
Distance 'b'

**Scan On**

# FIG. 7B

RGB

R    G    B

Triggering

CRITICAL VALUE ————————————————— 150

20

TIME

## FIG. 8A

Speaker

200

100

MIC — 114

Sensor Hub — 141

(SLEEP MODE)

Unsatisfied Condition Distance 'c'

**Scan Off**

## FIG. 8B

100

200

(WAKE-UP MODE)

Satisfied Condition Distance 'd'

**Scan On**

## FIG. 9

START

SCAN EXTERNAL DEVICE (RECEIVE INFORMATION ABOUT REQUESTED SERVICE) — S910

IS REQUESTED SERVICE AVAILABLE? — S920

NO

YES

DISPLAY OBJECT INCLUDING INFORMATION ABOUT EXTERNAL DEVICE AND INFORMATION ABOUT REQUESTED SERVICE — S930

IS ACCEPTANCE INPUT OF USER REGARDING REQUESTED SERVICE RECEIVED? — S940

NO

YES

ESTABLISH COMMUNICATION LINK WITH EXTERNAL DEVICE — S950

PROVIDE REQUESTED SERVICE THROUGH COMMUNICATION LINK — S960

END

# FIG. 10

# FIG. 11

# FIG. 12

# FIG. 13

① BROADCAST IDENTIFICATION INFORMATION
AND REQUEST FOR AP INFORMATION (S1310)

THROUGH ADVERTISING CHANNEL

② ESTABLISH DATA COMMUNICATION LINK (S1320)

SET UP DATA CHANNEL

③ TRANSMIT CONNECTION INFORMATION OF
AP (S1330)

THROUGH SECURED DATA CHAANEL

CONNECTION

④ CONDUCT AP CONNECTION (S1340)

AP — 300

100

1300 — Need WiFi / HomeSync

Accept WiFi AP Info. Sharing ?

Yes   No

Need WiFi

HomeSync — 200

EP 2 816 498 A1

# FIG. 14

## FIG. 15A

200

100

Sound/BLE Advertising (S1505)

Sound/BLE SCAN (S1510)

Pairing Request (S1515)

Pairing Response (S1520)

Connect Request (S1525)

Connect Response (S1530)

SCAN ADJACENT DEVICE

CLASSIC BT AUTHENTICATION PROCESS

CONNECTION PROCESS

## FIG. 15B

200

100

Sound/BLE Advertising (S1535)

Sound/BLE SCAN (S1540)

P2P scanning/searching(S1545)

GO negotiation (S1550)

WPS Provisioning (S1555)

Association (S1560)

SCAN ADJACENT DEVICE

WI-FI P2P SCANNNIG PROCESS

GROUP FORMATION PROCESS

# FIG. 16

100
ELECTRONIC DEVICE

200
EXTERNAL DEVICE

BROADCAST INFORMATION ABOUT
EXTERNAL DEVICE AND INFORMATION
ABOUT REQUESTED SERVICE (S1610)

S1620
SCAN EXTERNAL DEVICE AND
DISPLAY INFORMATION ABOUT
REQUESTED SERVICE

S1630
OUTPUT
AUTHENTICATION
INFORMATION

S1640
RECEIVE AUTHENTICATION
INFORMATION OF EXTERNAL DEVICE

TRANSMIT AUTHENTICATION INFORMATION
(S1650)

S1660
PERFORM
AUTHENTICATION

TRANSMIT RESULT OF AUTHENTICATION
(S1670)

S1680
NO
IS AUTHENTICATION
SUCCESSFUL?

YES
PROVIDE REQUESTED SERVICE (S1690)

# FIG. 17

# FIG. 18

```
                    ┌──────────┐
                    │  SRART   │
                    └────┬─────┘
                         │
                         ▼
   ┌──────────────────────────────────────────┐
   │   SCAN PLURALITY OF EXTERNAL DEVICES      │──── S1810
   └──────────────────────┬───────────────────┘
                          │
                          ▼
   ┌──────────────────────────────────────────┐
   │   DISPLAY LIST OF OBJECTS RESPECTIVELY    │
   │   CORRESPONDING TO PLURALITY OF           │──── S1820
   │   EXTERNAL DEVICES                        │
   └──────────────────────┬───────────────────┘
                          │
                          ▼
   ┌──────────────────────────────────────────┐
   │  RECEIVE SELECTION OF OBJECT FROM LIST OF │
   │  OBJECTS                                  │──── S1830
   └──────────────────────┬───────────────────┘
                          │
                          ▼
   ┌──────────────────────────────────────────┐
   │  DISPLAY ADDITIONAL INFORMATION ABOUT     │
   │  SELECTED OBJECT                          │──── S1840
   └──────────────────────┬───────────────────┘
                          │
                          ▼
                    ┌──────────┐
                    │   END    │
                    └──────────┘
```

FIG. 19B

FIG. 19A

# FIG. 20

**COMMUNICATION UNIT** — 110

**SHORT-RANGE COMMUNICATION UNIT (111)**

| Bluetooth | BLE |
| NFC/RFID | WLAN |
| ZIGBEE | IrDA |
| Wi-Fi Direct | UWB |

112 — MOBILE COMMUNICATION UNIT

113 — BROADCAST RECEIVING UNIT

114 — MICROPHONE

115 — CAMERA

**SENSING UNIT** — 150

| 151 — MAGNETIC SENSOR | POSITION SENSOR — 156 |
| 152 — ACCELEROMETER | BAROMETER SENSOR — 157 |
| 153 — TEMPERATURE/HUMIDITY SENSOR | PROXIMITY SENSOR — 158 |
| 154 — INFRARED SENSOR | RGB SENSOR — 159 |
| 155 — GYROSCOPE SENSOR | |

**CONTROL UNIT (Processor)** — 140

CP — 145

AP — 143

SSP Sensor Hub (MCU) — 141

**OUTPUT UNIT** — 120

DISPLAY UNIT — 121

SOUND OUTPUT UNIT — 122

VIBRATION MOTOR — 123

USER INPUT UNIT — 130

**MEMORY** — 160

UI MODULE — 161

TOUCH SCREEN MODULE — 162

MACHINE LEARNING MODULE — 163

ALARM MODULE — 164

100

EP 2 816 498 A1

# FIG. 21

COMMUNICATION UNIT — 110

SENSING UNIT — 150

Sensor Hub — 141

SSP: Seamless Sensing Platform

SSP Manger — 142

AP — 143

Interrupt (S10)

Start to Send Data Type & Length (S20)

Data Type & Length (SubCMD) to send (S30)

Start to Read MSG (S40)

Send Message (S50)

EP 2 816 498 A1

Europäisches
Patentamt

European
Patent Office

Office européen
des brevets

# EUROPEAN SEARCH REPORT

Application Number

EP 14 17 1900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/248751 A1 (PIRZADA FAHD B [US] ET AL) 9 October 2008 (2008-10-09) * paragraphs [0003], [0033] - [0037] * ----- | 1-15 | INV. G06F21/10 |
| X | US 2008/045189 A1 (KIM HEE WOON [KR] ET AL) 21 February 2008 (2008-02-21) * paragraphs [0041] - [0052]; figure 4 * ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 13 October 2014 | Kerschbaumer, J |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 14 17 1900

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2014

| Patent document cited in search report | | Publication date | Patent family member(s) | | Publication date |
|---|---|---|---|---|---|
| US 2008248751 | A1 | 09-10-2008 | CN | 1832425 A | 13-09-2006 |
| | | | DE | 102006010193 A1 | 19-10-2006 |
| | | | FR | 2887716 A1 | 29-12-2006 |
| | | | GB | 2424151 A | 13-09-2006 |
| | | | HK | 1099977 A1 | 04-11-2011 |
| | | | IE | 20060163 A1 | 20-09-2006 |
| | | | SG | 126048 A1 | 30-10-2006 |
| | | | TW | I328775 B | 11-08-2010 |
| | | | US | 2006205354 A1 | 14-09-2006 |
| | | | US | 2008248751 A1 | 09-10-2008 |
| US 2008045189 | A1 | 21-02-2008 | CN | 101128052 A | 20-02-2008 |
| | | | EP | 1892603 A1 | 27-02-2008 |
| | | | US | 2008045189 A1 | 21-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130069956